# FASCICULE DE BREVET EUROPEEN

(11) **EP 3 105 998 B1**
(45) Date de publication et mention de la délivrance du brevet: **03.04.2024**
(21) Numéro de dépôt: 15704314.2
(22) Date de dépôt: 13.02.2015
(51) Int. Cl.: H05B 45/10, H05B 47/105, H05B 47/11, H05B 47/19, F21L 4/00, F21V 33/00, H04W 4/90, H04W 4/02, H04W 4/08, H04W 4/70, H04W 76/10, H05B 45/12, F21L 4/02, F21V 23/04, H04W 4/80

(54) **LAMPE ELECTRIQUE PORTATIVE DOTEE D'UN SYSTEME DE COMMUNICATION SANS FIL**
TRAGBARE ELEKTRISCHE LAMPE MIT EINEM DRAHTLOSKOMMUNIKATIONSSYSTEM
PORTABLE ELECTRIC LAMP PROVIDED WITH A WIRELESS COMMUNICATION SYSTEM

(30) Priorité: 14.02.2014 FR 1400408
(43) Date de publication de la demande: 21.12.2016
(73) Titulaire: Zedel S.A., 38920 Crolles (FR)
(72) Inventeur: BORTOLOTTI, Raphaël, F-74940 Annecy le Vieux (FR); MARIE, Christophe, F-38420 Le Versoud (FR)
(74) Mandataire: Schuffenecker, Thierry
(86) Numéro de dépôt international: PCT/EP2015/053134
(87) Numéro de publication internationale: WO 2015/121433

(56) Documents cités:
- EP-A1- 1 944 540
- EP-A2- 2 345 864
- WO-A1-2010/039107
- WO-A1-2010/144426
- CN-A- 103 582 252
- CN-A- 103 582 253
- CN-Y- 2 793 520
- FR-A1- 2 961 055
- FR-A1- 2 991 545
- US-A1- 2003 067 769
- US-A1- 2008 198 280
- US-A1- 2008 265 799
- US-A1- 2012 026 726

## Description

### Domaine technique de l'invention

La présente invention concerne le domaine des lampes électriques portatives et notamment, une lampe électrique portative dotée d'un système de communication sans-fil.

### Etat de la technique

La demanderesse de la présente demande de brevet a commercialisé une lampe portative, de type lampe frontale, dotée d'un éclairage dit « réactif » ou « dynamique » qui est décrite dans la demande de brevet WO 2009/133309 A1 déposée le 16 Avril 2009. Brièvement, comme cela est illustrée dans la figure 1, il s'agit d'une lampe frontale comportant au moins une diode électroluminescente 11 de type LED ainsi qu'un capteur optique 14 logé dans son voisinage et destiné à capter un signal représentatif de la lumière réfléchie par la surface d'un objet 16 éclairé par la lampe. Un circuit de commande 13 assure un traitement de ce signal dans le but de réguler automatiquement la puissance de la LED en fonction d'un seuil prédéterminé. De cette manière, une régulation automatique du faisceau lumineux émis par la lampe est effectuée sans autre action manuelle afin d'adapter l'éclairage à l'environnement, tout en gérant la consommation en énergie.

Le principe de cet éclairage dit « réactif » ou « dynamique » constitue indéniablement une avancée significative dans le domaine des lampes frontales, et plus généralement de l'éclairage portatif, notamment en ce qu'elle permet d'adapter l'éclairage de manière constante aux conditions d'éclairement.

En revanche il apparaît que l'intégration de moyens de traitement du signal et de processeur dans des lampes frontales augmente rapidement à la fois le coût de ces lampes ainsi que leur poids et leur encombrement.

Le problème se pose donc de permettre à la fois cette intégration de fonctionnalités supplémentaires et innovantes dans les lampes frontales nécessitant des ressources de calcul importantes, sans pour autant augmenter significativement le coût de fabrication, le poids et/ou l'encombrement de ces lampes.

La demanderesse de la présente demande de brevet a aussi posé la demande Européenne publiée comme EP2706824 A1 dans laquelle une lampe de type frontale est équipée de moyens de communication de type Infrarouge (IR) afin de pouvoir détecter l'apparition d'une seconde lampe aussi pourvue de moyens de communication IR et de modifier les puissances d'éclairage afin d'éviter tout éblouissement réciproque.

La demande de brevet US 2008/265799 A1 aborde le problème de la fourniture de l'éclairage d'une manière éconergétique et intelligente et décrit un traitement réparti sur un réseau d'éclairages pour contrôler l'illumination pour un environnement donné. Le réseau contrôle le niveau d'éclairage et le motif en réponse à la lumière, au son et au mouvement. Le réseau peut également être formé selon les modules de comportement du logiciel téléchargé, et les sous-ensembles du réseau peuvent être organisés en groupes pour le contrôle de l'éclairage et les rapports de maintenance.

La lampe comprend un module de commande de la luminosité selon des programmes mémorisés: un des programmes prévoit la transmission sans fil vers un dispositif externe de l'état de charge de la batterie, mais la gestion (réduction) de la luminosité en fonction de la capacité de la batterie est exécutée par le module de commande interne à la lampe.

La demande de brevet US 2012/026726 A1 décrit un éclairage à LED commandé avec une source d'alimentation intégrée. La source de lumière à base de LEDs peut prendre la forme d'une ampoule standard qui se branche dans une prise ou un luminaire d'éclairage standard. La lampe, qui peut être aussi du type portatif, comprend des moyens sans fil pour une communication bidirectionnelle avec un émetteur-récepteur RF distant utilisé pour programmer la lampe et pour collecter de données de fonctionnement de la lampe comme le niveau de charge de la batterie. Un dispositif de contrôle interne à la lampe s'occupe de la gestion de l'intensité lumineuse en fonction du niveau de charge de la batterie.

La demande de brevet US 2003/067769 A1 décrit une lampe frontale comportant une batterie, un module d'éclairage à LEDs muni de récepteur sans fil, une unité de contrôle munie de transmetteur sans fil pour envoyer des signaux de commande au module LED, si le module LED n'est pas monté proche à l'unité de contrôle. La lampe comprend des moyens pour sélectionner une période d'illumination minimale; l'unité de contrôle mesure le niveau de charge de la batterie et allume un nombre de LEDs nécessaire à assurer le temps d'illumination minimum.

La demande de brevet FR 2961055 A1 décrit un réseau de balises autonomes**.** Les balises comprennent un éclairage à LEDs, une batterie, des capteurs et un module radio qui permet la communication bidirectionnelle avec un téléphone intelligent; celui-ci reçoit l'état de charge de la batterie et peut envoyer de programmes en fonction de données des capteurs.

La demande de brevet FR 2 991 545 A1 divulgue un système d'éclairage comportant une lampe portative à LEDs et un téléphone intelligent. La lampe comprend une batterie d'alimentation, une unité de traitement et des moyens de communication sans fil pour assurer la communication bidirectionnelle avec le téléphone qui est utilisé pour créer, adapter et transmettre des programmes de contrôle à la lampe. La lampe comprend un ampèremètre détectant le taux de charge de la batterie, ce taux étant utilisé pour ajuster la couleur ou une fréquence de clignotement d'une de sources lumineuses de la lampe. La lampe peut envoyer des informations représentatives de l'énergie consommée par la lampe au téléphone, ce dernier utilisant les informations pour adapter un programme de contrôle ou pour dresser un profil de consommation électrique de la lampe. Les programmes de contrôle peuvent être adaptés aussi en fonction des autres paramètres de la lampe ou relevés depuis l'Internet.

### Exposé de l'invention

C'est un but de la présente demande de brevet de proposer une nouvelle architecture de lampe portative, notamment une lampe frontale, qui permette l'intégration de nouvelles fonctionnalités sans requérir d'accroissement significatif en ce qui concerne le coût de fabrication, la puissance de calcul ou l'encombrement de la lampe.

C'est un autre but de la présente demande de brevet de permettre une communication efficace et performante entre une lampe portative et un dispositif de traitement de données mobiles, externe à la lampe, pour améliorer la régulation de la puissance lumineuse ou l'ajout de nouvelles fonctionnalités.

C'est un troisième but de la présente demande de brevet de proposer une architecture de lampe portative qui puisse permettre une utilisation au sein d'une flotte de lampes, avec le souci, notamment, d'un accroissement de l'autonomie de toutes les lampes portatives au sein de cette flotte.

C'est un quatrième but de la présente demande de brevet de réaliser une lampe portative dotée d'une régulation sophistiquée de la puissance d'émission du faisceau ainsi que de la géométrie de ce même faisceau.

C'est un cinquième but de la présente demande de brevet de réalisation une lampe portative, notamment frontale, offrant de nouvelles fonctionnalités en terme de sécurité, et notamment d'une fonction d'alerte permettant d'informer les porteurs de lampes au sein d'un même groupe.

C'est un sixième but de la présente demande de brevet de réaliser une lampe portative dotée d'une nouvelle fonctionnalité permettant d'informer rapidement le porteur de la lampe lorsque celui-ci s'égare par rapport à un chemin prédéterminé ou prend une mauvaise direction.

La présente invention concerne un système d'éclairage tel que défini dans la revendication 1 et un procédé de commande du fonctionnement d'une lampe portative tel que défini dans la revendication 6. La présente demande décrit une lampe portative comportant des premiers moyens de communication bidirectionnels sans fil pour échanger des commandes, paramètres et/ou données de configuration avec au moins un système mobile de traitement de l'information, comportant :
- des moyens pour établir une liaison descendante destinée à la transmission desdites commandes, paramètres et/ou données de configuration vers la lampe ;
- des moyens pour établir une liaison montante destinée à la transmission de commandes, paramètres et/ou données de configuration de la lampe vers ledit système mobile de traitement de l'information.

De cette manière la lampe portative peut communiquer avec un dispositif mobile de traitement de données, tel qu'un téléphone mobile de manière à tirer avantage de la grande puissance de calcul présente dans celui-ci.
Dans un mode de réalisation particulier, la lampe comporte également des moyens de communication bidirectionnels supplémentaires permettant une communication avec au moins une autre lampe, ouvrant ainsi la voie à la constitution d'un véritable réseau ad-hoc dans lequel chacune des lampes ainsi que le ou les systèmes mobiles reçoivent un identifiant. Plus spécifiquement le réseau ad-hoc utilise des adresses de groupe permettant d'adresser simultanément plusieurs lampes et/ou systèmes mobiles appartenant à un même groupe et les transmissions en liaison montante et/ou descendante peuvent être destinées à tous les dispositifs d'un même groupe.

De préférence, la lampe portative comporte des moyens de détection de l'état de charge de la batterie, ledit état étant transmis via la liaison montante au dispositif mobile.

Dans un mode de réalisation particulier, la lampe comporte un photocapteur, opérant dans le domaine visible et/ou infrarouge, destiné à générer une information de luminosité qui est transmise via la liaison montante au dispositif mobile.

De préférence, la liaison montante sert à la transmission d'une information de puissance et/ou une information représentative de la géométrie du faisceau .

Dans un mode de réalisation spécifique, la lampe portative comporte des moyens de commande de la luminosité de la lampe, pilotés par une première information reçue du dispositif mobile via la liaison descendante. Plus spécifiquement, une seconde information reçue du dispositif mobile permet de venir fixer la géométrie du faisceau lumineux.

De préférence, la lampe comporte des moyens de commande de géométrie du faisceau basé sur un dispositif diffusant commandé électriquement, tel qu'un film PDLC.

De préférence, la première communication communication bidirectionnelle est basée sur une communication Bluetooth ou Wifi, et la lampe portative est une lampe frontale comportant une ou plusieurs LEDs.

La présente demande décrit également la réalisation d'un procédé de commande du fonctionnement d'une lampe portative, ledit procédé comportant les étapes :
- établissement d'une communication bidirectionnelle et sans fil entre la lampe et un système mobile de traitement de l'information, comprenant une liaison descendante vers la lampe et une liaison montante vers ledit système mobile de traitement de l'information;
- ladite liaison descendante étant destinée à la transmission desdites commandes et/ou données de configuration vers la lampe ; et
- ladite liaison montante étant destinée à la transmission de paramètres de fonctionnement de la lampe vers ledit système mobile de traitement de l'information.

Plus spécifiquement le procédé comporte les étapes :
- détection de l'état de charge de la batterie de la lampe ;
- transmission audit système mobile de l'état de charge de la batterie.

Dans un mode de réalisation spécifique, le procédé comporte les étapes de :
- détection de la luminosité présente face à la lampe au moyen d'un photocapteur ;
- transmission audit système mobile d'une information représentative de ladite luminosité captée par le photocapteur.

Plus spécifiquement la luminosité de la lampe et la géométrie de son faisceau sont respectivement commandés par une première et une seconde information reçue dudit dispositif mobile via la liaison descendante.

Dans un mode de réalisation spécifique, les moyens de communication bidirectionnels sont organisés suivant un réseau ad-hoc dans lequel chacune des lampes ainsi que le ou les systèmes mobiles reçoivent un identifiant, le réseau ad-hoc utilisant des adresses de groupe permettant d'adresser simultanément plusieurs lampes appartenant à même groupe.

De préférence, le procédé utilise l'état de charge de la batterie fourni par la lampe et génère ladite première information en fonction dudit état de charge de manière à garantir un temps d'autonomie prédéfini pour la lampe.

Dans un mode de réalisation particulier, le procédé est tel que le dispositif mobile reçoit l'état de charge de la batterie fournie par chaque lampe dudit groupe et génère ladite première information pour chacune des lampes dudit groupe en fonction desdits états de charge de manière à garantir un temps d'autonomie prédéfini pour l'ensemble du groupe.

Dans un mode de réalisation particulier, le procédé détecte une situation d'urgence et transmet sur la liaison descendante vers la lampe une commande d'alerte commandant la génération d'un signal d'alarme lumineux. La situation d'urgence pour résulter plus spécifiquement de l'exploitation de données GPS pour déterminer la présence d'une bifurcation devant attirer l'attention de l'utilisateur de la lampe ou pour informer celui-ci qu'il s'éloigne d'un chemin prédéterminé.

La demande décrit également la réalisation d'un programme d'ordinateur, de type APPLICATIF, comportant du code de programmation destiné à être stocké dans le dispositif mobile, et destiné à la mise en oeuvre des procédés définis ci-dessus.

La demande décrit enfin la réalisation d'un dispositif de traitement mobile spécialement adapté, par l'installation d'une application ou d'un applicatif pour la mise en oeuvre des procédés décrits précédemment.

### Description des dessins

D'autres caractéristiques, but et avantages de l'invention apparaîtront à la lecture de la description et des dessins ci-après, donnés uniquement à titre d'examples non limitatifs. Sur les dessins annexés :

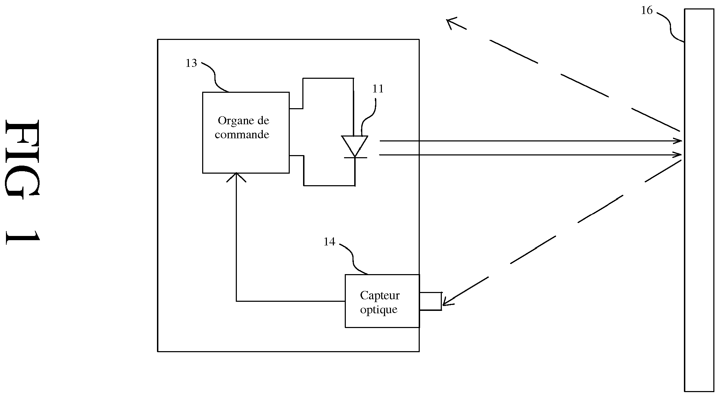

La figure 1 illustre le schéma de principe de l'éclairage dit « dynamique » ou « réactif » connu dans l'état de la technique.
La figure 2 illustre un premier mode de réalisation de la présente invention permettant la délocalisation de la commande de la puissance du faisceau de la lampe via la liaison descendante.
La figure 3 illustre l'organisation du dispositif de traitement de données mobiles 300 utilisée dans la premier mode .
La figure 4 illustre un second mode de réalisation de la présente invention permettant la commande de la puissance du faisceau et de l'angle de diffusion via la liaison descendante.
La figure 5 illustre un troisième mode de réalisation de la présente invention montrant l'intégration de la technologie d'affichage « dynamique » ou « réactif » .
La figure 6 représente un procédé amélioré d'éclairage « réactif » ou « dynamique » utilisant le troisième mode de réalisation.
La figure 7 illustre un quatrième mode de réalisation offrant des fonctionnalités de communication tant avec un dispositif mobile 300 qu'avec d'autres lampes appartenant à une même flotte.
La figure 8 illustre un diagramme d'un scénario utile pour permettre la régulation de la puissance lumineuse d'une lampe au sein d'un groupe de lampes organisées en réseau.

### Description des modes de réalisation

Les inventeurs de la présente demande de brevet ont reconnu tout d'abord que de tels processeurs ou moyens de traitement du signal numérique sont de plus en plus présents à proximité immédiate de la lampe, que ce soit intégrés dans des téléphones portables (dits « *smartphone* » dans la pratique anglo-saxonne) ou tablettes tactiles que l'on englobera sous le terme de système de traitement de l'information mobile.

Partant de ce constat, les inventeurs ont conçu un système permettant d'intégrer ces moyens de traitement du signal numérique ou processeurs à la lampe frontale en dotant cette dernière de moyens de communication sans fil et bidirectionnels permettant ainsi de délocaliser les différentes tâches de calcul au sein du système de traitement de l'information mobile. Les entrées et sorties du processeur sont communiquées sur la liaison sans-fil bidirectionnelle.

Cette opération conjointe de deux appareils augmente considérablement les possibilités de régulation de la lampe frontale et permet même nombre de nouvelles fonctionnalités possibles comme cela apparaîtra ci-après, tout en maintenant à un niveau raisonnable les coûts de fabrication d'une telle lampe puisque la puissance de calcul est délocalisée dans un dispositif externe à celle-ci.

Dans l'ensemble des modes de réalisation ci-dessous, on parlera de liaison montante lorsque la lampe frontale est l'émettrice de commandes, de données ou de paramètres de configuration à destination du système mobile de traitement de l'information et, inversement, on parlera de liaison descendante lorsque le système de traitement de l'information mobile est l'émetteur d'informations dont la lampe frontale est réceptrice.

Sur ces deux liaisons respectivement montante et descendante, l'on distinguera plus spécifiquement un ou plusieurs canal de **données** et un ou plusieurs canal de **contrôle** qui pourront être avantageusement transmis via une même liaison montante ou descendante. Ainsi, par exemple un capteur optique (de type photodiode, phototransistor, CCD ou autre) et/ou un capteur d'image (capteur infra-rouge de type Passive Infra-red Sensor, caméra analogique dotée de son système optique ou autre) qui seront logées sur la lampe pourront transmettre des **données** vers le dispositif mobile de traitement de données (notamment des images...) via la liaison montante, tandis que des commandes ou requêtes - par exemple pour venir fixer la puissance lumineuse - pourront être transmises via le canal de **contrôle** sur la liaison descendante. Mais cela n'est qu'un exemple parmi de nombreuses autres possibilités.

Grâce à cette disposition, il en découlera de multiples nouvelles fonctionnalités comme cela va apparaître avec l'exposé de quatre modes de réalisation qui va suivre :
1) un premier mode dans lequel on délocalise au sein du dispositif mobile de traitement de données la fonction de régulation de la puissance lumineuse ;
2) un second mode dans lequel on délocalise au sein du dispositif de traitement de données les deux paramètres du faisceau : la puissance et l'angle de diffusion
3) un troisième mode dans lequel on combine les deux liaisons montante et descendante avec le principe de l'éclairage dit « réactif » ou « dynamique »
4) un quatrième mode dans lequel la lampe devient communicante, non seulement avec son dispositif de traitement mobile associé mais également avec d'autres lampes portatives

### 1) Premier mode de réalisation : Commande de la puissance via la liaison descendante

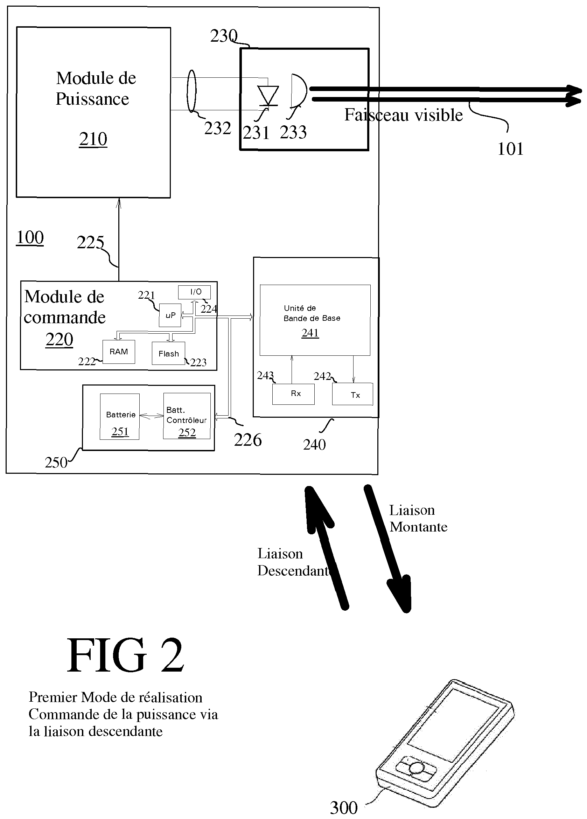

La **figure 2** illustre l'architecture générale d'un premier mode de réalisation d'une lampe 100 - supposée frontale - comportant un système de régulation de l'intensité lumineuse. La lampe 100 comprend un module de puissance 210 associé à un module de commande 220 et une unité d'éclairage 230 comportant au moins une diode électroluminescente DEL (ou LED dans la littérature anglo-saxonne) ainsi qu'un module émetteur-récepteur 240 couplé au module de commande et un module de batterie 250 lui aussi couplé au module de commande.

Dans l'exemple de la figure 2, l'unité d'éclairage 230 comporte une unique diode LED 231 dotée de son circuit d'alimentation 232 connecté au module de puissance 210. Clairement, plusieurs diodes pourront être envisagées pour l'obtention d'un faisceau de forte luminosité. D'une manière générale, la ou les diodes LED(s) peuvent être associée(s) à une optique focale propre 233 permettant d'assurer une collimation du faisceau lumineux généré.

Dans un mode de réalisation spécifique, l'alimentation en courant de la diode LEDs 231 via le circuit 232, est effectuée par le module de puissance sous la commande d'une information ou d'un signal de commande généré par le module de commande 220 via un lien qui pourra prendre la forme d'un conducteur ou d'un ensemble de conducteurs constituant un bus. La figure montre plus particulièrement l'exemple d'un conducteur 225.

Le module de puissance 210 comporte spécifiquement tous les composants que l'on rencontre conventionnellement dans une lampe d'éclairage à LEDs pour la production d'un faisceau lumineux de forte intensité, et en général basée sur la Modulation en Largeur d'impulsion MLI (ou *Puise Width Modulation* dans la littérature anglo-saxonne), bien connue d'un homme du métier et similaire à celle que l'on rencontre dans les circuits audio de classe D. Cette modulation MLI est commandée au moyen du signal de commande 225 généré par le module de commande 220. D'une manière générale, l'on notera que le terme "signal" mentionné précédemment renvoie à une grandeur électrique - courant ou tension - permettant de provoquer la commande du module de puissance, et notamment la modulation MLI servant à alimenter en courant la diode LED 231. Il ne s'agit ici que d'un mode particulier de réalisation, étant entendu qu'il sera possible de substituer au "signal de commande 225" toute "information de commande", par exemple une information logique stockée dans un registre et transmise comme cela a été dit par tout moyen approprié au module de puissance 210 dans le but de commander la puissance d'émission du faisceau lumineux. Le signal de commande peut donc être émis sur différents supports selon qu'il s'agit d'un signal ou d'une information. Ces supports peuvent être une ligne de communication de type bus couplant le module de commande et le module de puissance ou un simple circuit électronique de transfert d'une tension ou intensité de contrôle. Dans un mode de réalisation particulier, l'on pourra même envisager que les deux modules de commande et de puissance soient intégrés dans un même module ou circuit intégré.

Un homme du métier comprendra donc aisément que lorsque l'on se réfère à un "*signal de commande 225*", l'on englobe indistinctement les réalisations recourant à une grandeur électrique de commande - courant ou tension - ainsi que les réalisations dans lesquelles la commande est réalisée au moyen d'une information logique transmise au sein du circuit de puissance. Pour cette raison, l'on parlera ci-après indistinctement de *signal* ou *d'information* de commande.

D'une manière générale, les composants qui composent le module de puissance 210 - commutateurs et circuits - sont bien connus d'un homme du métier et l'exposé sera délibérément allégé à cet égard dans un souci de concision. De même, le lecteur sera renvoyé aux ouvrages généraux traitant des divers aspects de la modulation MLI (ou PWM).

En revenant à la figure 2, l'on voit que le module de commande 220 comporte un processeur 221 ainsi que des mémoires volatiles 222 de type RAM et non-volatile (flash, EEPROM) 223 ainsi qu'un ou plusieurs circuits d'entrée/sortie 224.

Par ailleurs, la lampe frontale comporte en outre le module émetteur-récepteur 240 assurant une liaison bidirectionnelle avec le système de traitement de l'information mobile 300. Dans un mode privilégié de réalisation, l'émetteur ainsi que le récepteur seront compatible avec le standard *Bluetooth,* de préférence avec le standard *Bluetooth 4.0 low energy.* Dans un autre mode de réalisation, on adoptera plutôt le standard WIFI ou IEEE802.11. On pourra aussi imaginer la présence de ces deux standards à la fois pour avoir une communication de type maître-esclave *Bluetooth* entre la lampe et son système de traitement de l'information mobile associé, et une communication en réseau ad-hoc sous WIFI entre toutes les lampes et les systèmes de traitement de l'information mobile.

Le module émetteur-récepteur 240 comporte une unité bande de base 241 couplée à un récepteur 243 et à un émetteur 242.

Enfin, la lampe frontale comporte un module batterie 250 disposant d'un contrôleur 252 et d'une batterie 251.

D'une manière générale, le module de commande 220 peut accéder à chacun des autres modules présents dans la lampe, et notamment au module de puissance 210, au module émetteur-récepteur 240 ainsi qu'au module batterie 250. Cet accès pourra prendre des formes diverses, soit au moyen de circuits et/ou conducteurs spécifiques ou ensemble de conducteurs formant un bus. A titre d'illustration, le lien 225 est représenté dans la figure 2 sous la forme d'un conducteur tandis qu'un véritable bus de données/adresses/commandes 226 est utilisé pour l'échange d'information entre le module de commande 220, le module de batterie 250 et le module émetteur/récepteur 240.

Il ne s'agit toutefois que d'un mode particulier de réalisation, étant entendu qu'un homme du métier pourra procéder à diverses modifications et/ou adaptations le cas échéant pour tenir compte des exigences propres à l'application envisagée.

En accédant aux différents modules composant la lampe frontale, le module de commande 220 peut à la fois lire et collecter des informations contenus dans chacun de ces modules et/ou inversement, venir y transférer des informations, des données et/ou des commandes, comme cela ressortira plus clairement dans la suite de l'exposé.

C'est ainsi que le module de commande 220 peut envoyer au module de puissance un signal de commande comme cela est représenté par le signal transmis sur le lien 225 et, plus généralement, peut lire la valeur courante du courant d'alimentation de la diode 231 transitant via les conducteurs 232 (via des circuits et/ou bus non représentés sur la figure).

De manière similaire, le module de commande 220 peut accéder au module de batterie 250 via le bus 226 pour y lire soit les différentes valeurs de tension (suivant le cycle charge ou décharge en cours) aux bornes de celle-ci et/ou la valeur de l'intensité délivrée afin de pouvoir en calculer un état de charge (SOC ou *State Of Charge* dans la littérature anglo-saxonne).

Différentes méthodes existent dans l'état de l'art pour calculer l'état de charge restant de la batterie en fonction de différentes mesures effectuées, certaines nécessitant un stockage des données mesurées dans la mémoire non volatile Flash 223 à des fins de moyenne ou d'intégration. Ces méthodes bien connues de l'homme du métier sont appliquées par le processeur 221 suivant des algorithmes spécifiques et adaptés afin de déterminer l'état de charge restant de la batterie.

Suivant le mode de réalisation de la figure 2, le récepteur 243 et l'émetteur 242 qui composent le module 240 se chargent respectivement de traiter le signal reçu du dispositif mobile 300 via la liaison montante ainsi que le signal à transmettre à celui-ci via la liaison descendante. L'unité de bande de base 241 effectue le traitement des paquets d'information à destination de la lampe ou de son système de traitement de l'information mobile. A cet effet, l'unité bande de base 241 peut être amené à effectuer divers traitements, en série ou en parallèle, sur la représentation numérique du signal reçu par le récepteur 243 et à transmettre par l'émetteur 242, et notamment, des opérations de filtrage, de calcul statistique, de démodulation, de codage/décodage canal permettant de rendre la communication robuste au bruit, etc... De telles opérations sont bien connues dans le domaine du traitement du signal, notamment lorsqu'il s'agit d'isoler une composante particulière d'un signal, susceptible de porter une information numérique, et il ne sera pas nécessaire ici d'alourdir l'exposé de la description.

Une fois détectés, ces paquets sont transférés au processeur 221 au sein du module de commande 220.

Le processeur 221 est donc chargé de l'interprétation des paquets reçus ainsi que de la mise en forme de paquets pour l'émission selon un format spécifique au standard utilisé. Ainsi dans le cas du standard Bluetooth Low Energy, ces paquets auront une structure autour du *Generic Attribute Profile* (GATT) standardisé que l'on ne détaillera pas ici. En fonction de l'interprétation des bits de données inclus dans les paquets reçus, le processeur va reconstruire les éventuelles informations ou commandes reçues sur la liaison descendante en provenance du système de traitement de l'information mobile 300. Ayant interprété ces informations ou commandes, le processeur 221 va ensuite relayer ou convertir cette information ou commande vers le module concerné. Ainsi dans le mode de réalisation de base, le processeur 221 identifie des commandes à l'attention du module de puissance 210 afin de modifier l'intensité lumineuse et en réaction à cette identification est susceptible de générer une information de commande sur le conducteur 225 à destination du module de puissance 210 afin que ce dernier procède à la modification de l'intensité lumineuse générée par l'unité d'éclairage 230.

En outre, le processeur 221 peut aussi identifier des requêtes de lecture émises par le système de traitement de l'information mobile associé 300 afin que la lampe frontale envoie certains paramètres sur la liaison montante.

Ces requêtes peuvent ainsi être une requête d'état de charge de la batterie ou de la valeur de la puissance lumineuse actuelle. Dans ce cas, le processeur 221 va récupérer les informations nécessaires directement auprès du module concerné et après avoir réalisé d'éventuels calculs supplémentaires sur ces informations pour obtenir l'information requise finale (dans le cas de l'état de charge par exemple comme on l'a vu ci-dessus), va mettre en forme un paquet de données correspondant pour l'émission par le module émetteur-récepteur 240.

Comme cela est bien connu de l'homme du métier et appliqué dans nombre de standards en télécommunication, la communication entre la lampe frontale et le système de traitement de l'information mobile pourra se faire dans le cadre d'acquittements ou non-acquittements envoyés en réponse à chaque paquet correctement ou incorrectement détectés et connu sous le nom de *Automatic Repeat reQuest* (ARQ) en langue anglo-saxonne. Ce mode ARQ permet ainsi d'assurer une bonne réception des paquets de données dans les deux sens de communication et d'éviter toute rupture de communication.

Il est clair que la figure 2 décrit un mode de réalisation de base, et que bien d'autres modes de réalisation sont possibles et à la portée d'un homme du métier. Par exemple, dans un mode plus sophistiqué, d'autres modules pourront être ajoutés au sein de la lampe frontale et ces modules seront aussi couplés au processeur 221 via le bus 226 par exemple. Ces modules pourront alors aussi échanger en liaison montante ou descendante des données ou commandes avec le système de traitement de l'information mobile associé 300.

C'est ainsi que les canaux de données/contrôle en liaison montante et descendante peuvent servir avantageusement pour véhiculer des informations de données/commandes concernant un éventuel dispositif de commande de « zoom électrique » (comme ce que l'on verra plus spécifiquement avec le second mode de réalisation décrit ci-après) mais également un capteur de luminosité, un capteur d'images, un module haut-parleur/microphone, un autre module de puissance pour des LEDs auxiliaires qui pourra aussi être intégré dans le module de puissance 210 existant etc...

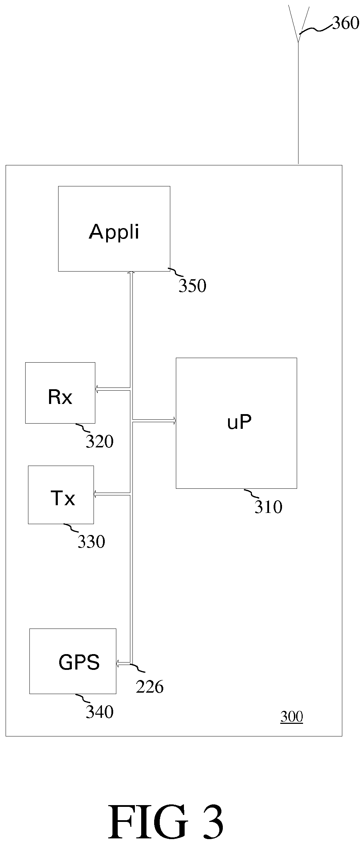

La lampe frontale est ainsi en communication bidirectionnelle avec un système de traitement de l'information mobile associé 300, par exemple un téléphone mobile ou *smartphone.* Ce système de traitement de l'information mobile 300 dispose en outre, comme on le voit dans la figure 3, de moyens de communication réciproques comportant un transmetteur 330 et un récepteur 320 servant respectivement à la liaison descendante et la liaison montante, d'un processeur central 310 et d'une application dédiée 350 stockée en mémoire (non représentée) et permettant l'échange d'informations avec la lampe frontale, et notamment le contrôle de cette dernière en utilisant du temps CPU dudit processeur 310.

Le processeur central 301 du système mobile 300 est en connexion avec les multiples modules présents sur ce dernier, comme par exemple un GPS 340 illustré dans la figure 3. L'application dédiée 350 démarrée sur le système de traitement de l'information mobile 300 sert à coordonner les différentes fonctionnalités et les échanges de communication avec la lampe frontale 100 tout en offrant une interface conviviale avec l'utilisateur au moyen de laquelle ce dernier pourra soit entrer des paramètres de fonctionnement, soit venir directement commander la lampe frontale ou sélectionner différentes options pour les fonctionnalités offertes.

L'application 350 peut ainsi, grâce à cette liaison bidirectionnelle entre la lampe frontale 100 et le système 300 accéder à tous les paramètres de la lampe et, inversement, venir régler et commander la plupart des fonctionnalités de cette dernière.

Dans ce mode de réalisation qui vient d'être décrit, l'application 350 pourra contrôler opportunément la puissance lumineuse générée par la lampe, depuis une valeur minimale qui correspondra en pratique à l'extinction de la lampe jusqu'à une valeur maximale qui correspondra à la puissance lumineuse maximale permise par cette dernière.

Alternativement, l'on prévoit dans ce premier mode de réalisation un interrupteur non représenté sur la figure 2, sous une forme classique comme par exemple une bague devant être tourner au niveau de la lampe ou encore un commutateur plus conventionnel. Cet interrupteur permet à l'utilisateur de commander directement l'allumage ou l'extinction de la lampe, indépendamment de tout échange de communication avec le dispositif 300 de telle sorte que, en l'absence d'une telle communication, la lampe se comporte de manière tout à fait conventionnelle suivant un mode dit « autonome ».

Mais cela n'exclut certainement pas la possibilité de venir ajouter un mode de commande plus sophistiqué faisant intervenir activement le système mobile 300. En effet, dès l'allumage de la lampe 100, le processeur 221 initialise le module émetteur-récepteur 240 dans le but d'établir une connexion avec le système de traitement de l'information mobile 300, afin de permettre des modes de fonctionnement plus sophistiqués en vue de la mise en oeuvre d'une régulation plus performante ou de l'apport de nouvelles fonctionnalités.

Le mode dit « autonome » sera rétabli dès lors qu'une rupture de connexion avec le système de traitement 300 interviendra, soit de manière délibérée à l'initiative du porteur, soit lors d'une perte de connexion entre la lampe et son dispositif de traitement mobile associé.

C'est ainsi que la lampe 100 peut répondre indépendamment à un mode de fonctionnement « manuel », sous la seule commande du bouton de commande (et/ou tout autre commutateur interne ou dispositif de régulation interne), ou à distance basée sur les deux liaisons descendante et montante.

Dans un mode privilégié de réalisation, la lampe est pourvue d'un interrupteur manuel commandant l'extinction du module de communication 240, et provoquant le fonctionnement autonome de la lampe.

Enfin dans un souci d'économie d'énergie, il sera utile de minimiser les opérations d'émission de la lampe frontale. On privilégiera donc un mode de fonctionnement où la lampe n'envoie des informations sur la liaison montante seulement sur requête reçue du système de traitement de l'information mobile 300 ou bien lorsqu'une valeur critique sous surveillance est dépassée, telle que, par exemple, la chute de l'état de charge de la batterie en dessous d'un seuil prédéterminé, ou encore une mesure de luminosité inférieure à un autre seuil prédéterminé.

Comme on le voit , le premier mode de réalisation tire avantage de la puissance de calcul mise à disposition par le dispositif 300, et offre la possibilité de multiples nouvelles fonctionnalités.

A cet effet, et dans un souci d'illustration de ces nombreuses possibilités de fonctionnalités nouvelles, l'on décrit à présent un premier scénario dans lequel la puissance de calcul du dispositif 300 et ses fonctionnalités de communication associées (accès base de données, GPS etc...) sont utilisées pour venir piloter les paramètres du faisceau lumineux et spécifiquement la puissance délivrée par la LED qui est fonction du courant d'alimentation circulant via le conducteur 232.

### Premier scénario d'utilisation :

Dans ce premier scénario, la lampe 100 reçoit en liaison descendante des commandes de puissance depuis le dispositif mobile associé 300 et, inversement, transmet sur la liaison montante une information représentative de l'état de charge de la batterie 251.

Dans un mode de réalisation particulier, cette information sera périodiquement transmise par la lampe 100 (et notamment le processeur 221) au dispositif 300. Alternativement, on pourra prévoir que cette information sera transmise en réponse à une requête spécifique émanant du dispositif 300 reçue via la liaison descendante.

Il ne s'agit ici que d'un exemple, non limitatif, de requêtes susceptibles d'être transmises par le dispositif 300.

D'autres requêtes pourront être considérées, notamment une requête visant à obtenir tout paramètre de fonctionnement quelconque de la lampe, tels que par exemple la puissance lumineuse courante, le courant d'alimentation de la LED 231, ou encore toute donnée générée par un capteur spécifique contenu dans la lampe, comme par exemple des capteurs optique (de type photodiode, phototransistor, CCD ou autre), un capteur d'image (capteur infra-rouge de type *Passive Infra-red Sensor*, caméra analogique dotée de son système optique ou autre) ou divers autres capteurs (accéléromètres etc...).

Tous ces paramètres évoqués, et bien d'autres, pourront ainsi être utilement transmis au dispositif mobile de traitement de données 300 via la liaison montante pour y être convenablement traités, notamment au sein d'une boucle de régulation sophistiquée tirant avantage de la grande puissance de calcul présente dans le dispositif mobile 300, pour finalement aboutir à une commande de réglage retournant vers la lampe frontale via la liaison descendante.

On pourra d'ailleurs combiner ces deux modes spécifiques en prévoyant une transmission périodique de paramètres significatifs du fonctionnement de la lampe (puissance, angle de diffusion, état de batterie etc...) ou en réponse à des requêtes spécifiques émanant du dispositif 300, ou encore lors de la détection de situation prédéterminée (charge de batterie inférieur à un seuil etc...).

Pour illustrer la grande flexibilité de la solution proposée et la multitudes de nouvelles possibilités de fonctionnalités ainsi offertes à l'utilisateur de la lampe frontale, l'on décrit à présent comment un tel échange de données et d'instructions peut servir à élaborer une nouvelle fonctionnalité visant à garantir une durée d'autonomie de la lampe frontale. Plus spécifiquement, on vise à garantir que la lampe sera capable de fournir de la lumière au moins pendant un temps précis ou valeur d'autonomie.

Ce temps précis est soit une valeur que l'utilisateur aura préalablement définie comme paramètre préenregistré sur l'application dédiée 350 tournant sur le téléphone mobile 300 (dans le mode de réalisation considéré). Ainsi l'application 350 permet à l'utilisateur de saisir comme paramètre une autonomie temporelle souhaitée, par exemple la durée estimée d'une excursion en heures ou minutes ou plus simplement encore une valeur directement extraite d'une bibliothèque personnelle de l'utilisateur. Dans un autre mode de réalisation, l'application 350 pourra calculer elle-même cette valeur d'autonomie en fonction de données GPS comme l'ensemble du parcours à réaliser et la vitesse de progression et pourra ajuster cette valeur en continu en fonction de l'évolution de la personne sur ledit parcours. Alternativement, cette valeur de paramètre pourra être directement calculée à partir d'information stockées sur un serveur distant et téléchargées par l'application 350. A partir de toutes ces informations disponibles au sein du dispositif mobile de traitement de données 300, et qui pourront être convenablement traitées au moyen d'algorithmes sophistiqués et complexes grâce à la grande puissance de calcul disponible au sein du dispositif 300, l'application 350 pourra alors calculer le temps d'autonomie requis en fonction de ce parcours, de données personnelles concernant l'utilisateur (vitesse moyenne, forme, données statistiques liées à des excursions précédentes etc...) et éventuellement d'autres facteurs comme l'heure, la météo, la situation lunaire (phase de la lune, lever et coucher) et/ou la luminosité ambiante. Ce temps d'autonomie sera ajusté en continu par l'application en tenant compte des mêmes facteurs eux aussi ajustés ainsi que la position de l'utilisateur sur ce parcours et la vitesse moyenne de l'utilisateur entre autres. On notera cette valeur d'autonomie Tₐᵤₜ.

Une fois cette valeur d'autonomie Tₐᵤₜ calculée, l'application 350 tournant dans le téléphone mobile 300 procède ensuite à des calculs ou estimations complémentaires concernant d'autres paramètres de fonctionnement de la lampe 100, tout d'abord l'état de charge actuel de la batterie, que l'on notera Cᵣₑₛₜₐₙₜ(t) ainsi qu'éventuellement d'autres facteurs comme l'heure, la météo, la situation lunaire (phase de la lune, lever et coucher) et/ou la luminosité ambiante (la luminosité ambiante pourra être obtenu par l'intermédiaire du capteur de luminosité du mode de réalisation particulier).

Une fois tous ces paramètres connus, l'application est à même de pouvoir calculer ou estimer d'éventuelles corrections à apporter en continu au fonctionnement de la lampe 100 et notamment en ce qui concerne la puissance du faisceau émis ou le courant d'alimentation de la LED 231. L'application 350 pourra aussi se borner à calculer une valeur moyenne de puissance délivrée par le module de puissance et noté Pₘ, en fonction de ces données, et transmettre cette valeur moyenne à intervalles réguliers à la lampe frontale, laquelle se chargera ensuite de suivre cette valeur moyenne tout en lui garantissant une certaine autonomie de fonctionnement.

De manière générale, l'application dédiée 350 pourra mettre en oeuvre divers algorithmes - simples ou sophistiqués - pour venir fixer précisément les paramètres de fonctionnement (puissance, diffusion) de la lampe 100.

Il est clair que de multiples algorithmes plus ou moins élaborés peuvent être conçus afin de garantir le temps d'autonomie de la lampe frontale fixé ou de s'en rapprocher au mieux, lesquels pourront dépendre de la puissance de calcul mise à disposition au sein du téléphone mobile 300, ou de la qualité et de la quantité des informations complémentaires disponibles pour l'application 450.

Le plus élémentaire d'entre eux consiste à obtenir en fonction de l'état de charge restant Cᵣₑₛₜₐₙₜ(t) ainsi que du temps d'autonomie restant à fournir (Tₐᵤₜ - t), la puissance moyenne délivrée par le module de puissance à suivre Pₘ. « t » est le temps d'autonomie déjà écoulé. L'état de charge pouvant être considéré comme l'énergie restante, on a une relation du type : Pₘ = a*^{k}√(Cᵣₑₛₜₐₙₜ(t)/ (Tₐᵤₜ - t)) pour une batterie au plomb, où a est une variable tenant compte du ratio d'énergie utilisé par la lampe pour la fonction d'éclairage seul et que l'on optimisera pour être le plus proche de 1, et k est connu sous le nom de constante de Peukert et reflète la non-linéarité de la capacité en fonction de l'intensité ou puissance fournie. Du fait des autres modules présents sur la lampe, a sera inférieur à 1. Un homme du métier pourra clairement adapter la formule à une batterie Li-Ion..

Cette valeur calculée Pₘ est directement associée par l'application dédiée 350 à un signal de commande correspondant qui est ensuite transmis à la lampe par l'émetteur 330.

Dans le mode de réalisation décrit, ce signal de commande transmis via le canal descendant est, dès réception par la lampe 100, détecté et directement appliqué au module de puissance 210 via le signal de commande 225, lequel peut ainsi ajuster la puissance lumineuse de la lampe frontale.

Mais la puissance de calcul du dispositif mobile 300 peut servir non seulement à venir régler la luminosité du faisceau lumineux, mais également tout autre paramètre comme on va le voir à présent avec le second mode de réalisation dans lequel la régulation délocalisée au sein du dispositif 300 portante tant sur la puissance d'émission que sur la géométrie du faisceau lumineux, ouvrant la voie à une véritable délocalisation hors de la lampe des caractéristiques de l'éclairage de cette même lampe.

### 2) Second mode de réalisation : Commande de la puissance et de l'angle de diffusion via la liaison descendante

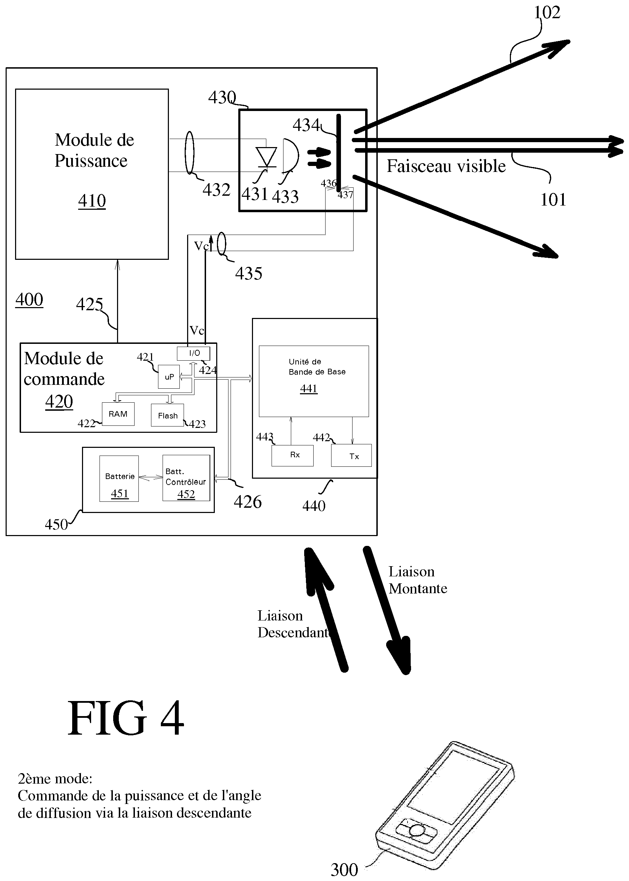

La **figure 4** illustre un second mode de réalisation plus sophistiqué d'une lampe frontale 400 dans lequel la puissance de calcul mise à dispositif par le dispositif 300 permet de venir régler non seulement la puissance d'émission du faisceau de la LED mais également la géométrie de ce même faisceau.

La lampe 400 comporte ici encore un module de puissance 410 - similaire au module 210 décrit précédemment - destiné à alimenter en courant un module d'éclairage 430 sous la commande d'un module de commande 420, ayant accès à un module batterie 450 (similaire au module 250 décrit précédemment) ainsi qu'à un module émetteur-récepteur 440 (similaire au module 240 décrit ci-dessus).

Comme précédemment, l'unité d'éclairage 430 comporte une unique diode LED 433 doté de son circuit d'alimentation 432 connecté au module de puissance 410. Dans ce second mode de réalisation, clairement, on pourra également envisager plusieurs LED pour l'obtention d'un faisceau de forte luminosité. La ou les LED(s) peuvent être associées à une optique focale propre 433 permettant d'assurer une collimation du faisceau lumineux généré, notamment de manière à produire un flux lumineux qui, dans ce second mode de réalisation, sera particulièrement étroit pour venir ensuite traverser un dispositif de commande de la géométrie de faisceau lumineux 434 destiné à régler l'angle de diffusion du faisceau lumineux de manière à générer un effet de « zoom » utile au porteur de la lampe.

De préférence, le dispositif 434 assurant la commande de la géométrie du faisceau lumineux est un dispositif électro-optique basé sur une couche ou un film PDLC (Cristaux liquides dispersés dans des polymères) qui est constitué de la mise en oeuvre de cristaux liquides par dispersion hétérogène au sein d'une matrice polymère. Ce film PDLC 434 peut remplacer avantageusement la vitre protectrice disposée habituellement devant les LEDs, et comporte deux électrodes 436 et 437 destinées à recevoir un potentiel de polarisation Vc transmis par des conducteurs 435.

Comme cela a été dit ci-dessus, l'optique 433 est réglée de manière à générer un faisceau collimaté particulièrement **étroit,** en sorte que la combinaison de cette optique 434 avec le dispositif électro-optique de diffusion 434 permet alors de produire, au moyen d'une unique diode LED, une grande configuration de faisceaux ayant des géométries différentes. L'on peut ainsi produire un premier faisceau étroit et long (avec un angle inférieur à 10°) représenté sur la figure 4 par la référence 101 ou à l'opposé un faisceau court et large 102 présentant un angle de diffusion plus important (30 ou 50 degrés).

Et toutes les valeurs intermédiaires sont possibles en venant simplement régler un potentiel de commande Vc à la valeur adéquate.

L'on obtient, grâce à cette disposition particulièrement avantageuse une lampe portative présentant une grande versatilité, puisque l'on peut venir simultanément commander non seulement la puissance lumineuse, mais également diverses configurations de faisceaux pouvant servir à de nouvelles fonctionnalités (lumière d'ambiance - lanterne - réveil simulateur d'aube).

De préférence, l'alimentation en courant de la diode LEDs 431 via le circuit 432, est effectuée par le module de puissance 410 sous la commande d'une information ou d'un signal de commande 425 qui est généré, de manière similaire au premier mode de réalisation, par le module de commande 420.

Le module de puissance 410 comporte des composants similaires à ceux qui avaient été décrits lors de l'exposé du module 210 en sorte qu'il ne sera pas nécessaire de revenir sur ces développements. Il suffit de rappeler une fois encore que l'on pourra se référer indistinctement à un signal de commande ou une information de commande pour préciser la manière dont le module de commande 420 vient piloter le module de puissance en venant déterminer la puissance d'alimentation de la LED 431.

Cependant, dans ce second mode de réalisation, le module de commande 420 sert également à générer un second signal ou une seconde information de commande destinée à venir régler le coefficient de diffusion du faisceau visible projeté par la lampe. A cet effet, le module de commande comporte, comme précédemment dans le premier mode de réalisation, un processeur 421 associée à des mémoires volatiles 422 (RAM) et non non-volatiles (flash, EEPROM) 423 ainsi qu'un ou plusieurs circuits d'entrée/sortie 424 qui pourra à présent servir, dans ce mode de réalisation spécifique, à venir générer le potentiel de commande Vc destiné à régler l'angle de diffusion du faisceau via le film PDLC 234.

Dans un souci de simplicité on a schématisé dans la figure 4, la génération du potentiel de commande Vc via le circuit d'entrée sortie I/O 424, sous la commande du processeur 421. En pratique, il faut envisager la génération d'un potentiel présentant une valeur assez élevé (plusieurs dizaines de volts), ce qui pourra requérir l'utilisation d'un contrôleur spécifique pour générer de telle tensions, lequel contrôleur sera composé de circuits électroniques adéquats (de type convertisseurs « boost ») commandé via le circuit d'entrée sortie 424 qui pourra venir y lire et écrire une information numérique représentative de la tension analogique Vc à générer. De telles adaptations sont clairement à la portée d'un homme du métier qui pourra adapter le schéma illustré dans la figure 4 à toute réalisation particulière.

La lampe portative 400 comporte par ailleurs un module émetteur-récepteur 440 dotée d'une unité de bande de base 441 communiquant avec une unité de transmission Tx 442 et une unité de réception Rx 443 permettant respectivement la liaison montante et la liaison descendante avec le dispositif mobile 300. Comme précédemment, l'émetteur 442 ainsi que le récepteur 443 seront compatible avec le standard *Bluetooth,* de préférence avec le standard *Bluetooth 4.0 low energy* ou, alternativement, avec le standard WIFI ou IEEE802.11.

Enfin, comme dans le premier mode de réalisation, la lampe frontale 400 comporte un module batterie 450 disposant de sa batterie 451 et de son contrôleur 452.

Ici encore, dans ce second mode de réalisation, le module de commande 420 peut accéder à chacun des autres modules présents dans la lampe, et notamment au module de puissance 410, au module émetteur-récepteur 440 ainsi qu'au module batterie 450. Grâce à cet accès , le processeur 420 pourra communiquer sur les liaisons montantes et descendantes tout paramètre utile, et notamment les informations représentatives de la puissance d'émission de la lampe mais également une information relative à l'angle de diffusion appliqué par le dispositif électro-optique 434.

Ainsi, dans le sens de la liaison montante, le module de commande 420 peut transmettre au dispositif 300 et à son applicatif 350 les informations relatives à la puissance d'émission de la lampe et du faisceau appliqué. Ces informations peuvent alors être convenablement traitées par le dispositif mobile 300 grâce à la puissance de calcul significative qu'il y recèle, et venir apporter tout correctif, périodiquement ou en temps réel, concernant la puissance de la lampe et l'angle de diffusion à appliquer.

Les échanges d'information entre la lampe frontale 400 et le dispositif mobile de traitement de données 300 peuvent intervenir, soit périodiquement à l'initiative de la lampe ou encore sur réponses à des requêtes générées par le dispositif 300.

L'applicatif 350 peut ainsi, grâce à cette liaison bidirectionnelle entre la lampe frontale 100 et le système 300 accéder à tous les paramètres de la lampe et, inversement, venir régler et commander la plupart des fonctionnalités de cette dernière, non seulement pour venir régler la puissance lumineuse générée par la lampe mais également l'angle de diffusion à appliquer au faisceau lumineux.

Cette commande des paramètres de fonctionnement de la lampe pourra être mise en oeuvre en étendant, au besoin, les scénarios décrit en relation avec le premier mode de réalisation ci-dessus, afin de permettre à l'applicatif 350 de calculer les paramètres globaux de fonctionnement de la lampe incluant la puissance et l'angle de diffusion à partir de diverses informations disponibles à l'applicatif ( état de charge de la batterie, durée d'excursion, profil de l'utilisateur, données GPS, heure courante, donnée météo etc...)

Et comme pour le premier mode de réalisation, cette liaison bi-directionnelle pourra être désactivée en tant que de besoin pour permettre le mode de fonctionnement autonome de la lampe.

Le second mode de réalisation qui vient d'être décrit montre que l'architecture proposée dans la présente invention n'a pas seulement pour vocation de permettre de venir commander un seul paramètre de la lampe frontale mais peut, bien au contraire, servir à piloter l'intégralité du fonctionnement de la lampe frontale.

Cela montre le grand intérêt qu'il y a à venir délocaliser la régulation du fonctionnement de la lampe au sein du dispositif externe 300, par exemple le téléphone mobile du porteur de la lampe, dans le but de bénéficier de toute la puissance de calcul disponible au sein de ce dernier et des informations multiples qui peuvent être stockées et mêmes téléchargées.

Mais cela n'épuise nullement les possibilités d'adaptation de la présente invention et l'on va à présent montrer, avec un troisième mode de réalisation, les avantages que l'on peut obtenir en combinant la solution proposée avec l'éclairage dit « dynamique » ou « réactif » mis au point par la demanderesse et fonctionnant en interne à la lampe par exemple).

### 3) Troisième mode de réalisation : intégration avec l'éclairage dit « dynamique » ou « réactif »

L'on considère à présent, avec ce troisième mode de réalisation, la coexistence de deux boucles de régulation de la puissance et de la géométrie du faisceau lumineux, à savoir une première boucle de régulation interne qui fonctionne suivant la technique conventionnelle de l'éclairage « réactif » ou « dynamique » tel que mis au point par la société demanderesse, ainsi qu'une seconde boucle de régulation externe fonctionnant suivant les principes décrits ci-dessus et venant impliquer le téléphone mobile 300.

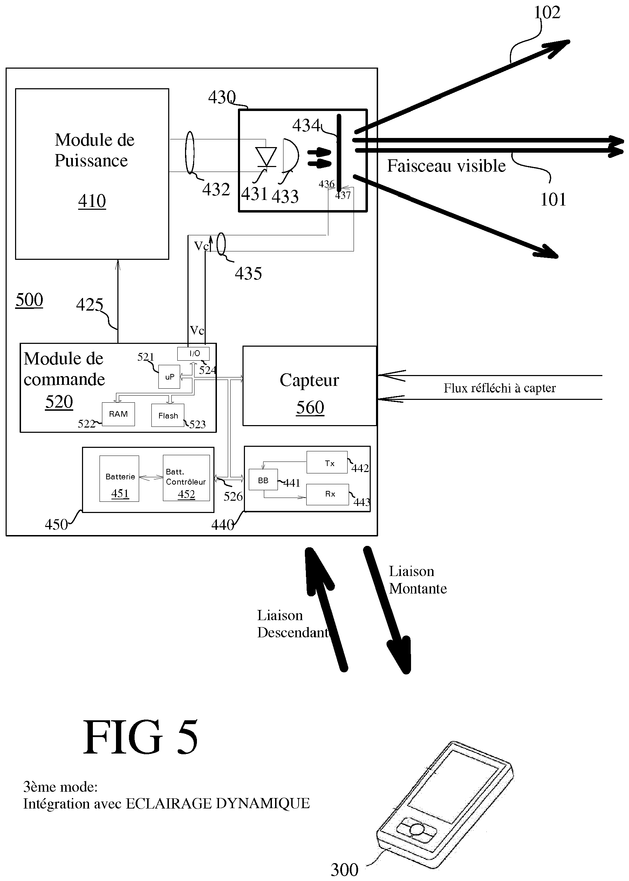

La figure 5 illustre ce troisième mode de réalisation dans lequel, par souci de concision et de simplification, l'on a conservé les mêmes références numériques aux constituants qui restent inchangés par rapport au second mode de réalisation.

La figure 5 illustre ainsi une lampe frontale 500 suivant le troisième mode de réalisation qui comporte, outre les modules 410, 430, 440 et 450 déjà présents dans le second mode de réalisation et que l'on ne décrit pas plus avant, un module de commande 520 ainsi qu'un capteur optique 560 qui est un capteur de type photodiode, phototransistor, CCD opérant dans le domaine visible et/ou infrarouge, et éventuellement combiné à son contrôleur associé. Le capteur optique 560 mesure la luminosité ambiante éventuellement combinée à l'éclairement reçu après réflexion sur des obstacles proches du faisceau lumineux émis par la LED et délivre un courant de sortie en fonction de l'éclairement auquel il est soumis. Le courant de sortie est sensiblement une fonction linéaire de l'éclairement capté en Lux. Pour plus de détails sur le capteur optique, on se référera à la demande de brevet WO2009/133309 de la demanderesse et déjà évoquée plus haut.

De son côté, le module de commande 520 comporte un processeur 521 associé à de la mémoire volatile (RAM) 522, à de la mémoire non volatile (FLASH , ROM) 523 et à des unités d'entrée/sorties I/O 524 qui communiquent via un bus d'adresses, de données et de commande 526 avec les différents modules présents dans la lampe, dont le capteur 560, mais également le module d'émission/réception 440 et le module de batterie 450 déjà décrits en relation avec le second mode de réalisation.

Grâce à cette disposition, le module de commande 520 peut avoir accès à l'information captée par le capteur 560 et en dériver une information représentative de la lumière réfléchi sur l'objet éclairé.

Cette information présente une grande utilité dans un fonctionnement « autonome » de l'éclairage dit « réactif » ou « dynamique », puisqu'elle permet au module de commande 520, via des algorithmes de régulation plus ou moins sophistiqués qui ne seront pas décrits ici, de venir fixer et régler non seulement la puissance d'émission de la lampe (via l'information ou le signal de commande transmis sur le lien 425) mais également l'angle de diffusion qu'il convient d'appliquer et qui est défini par le potentiel de polarisation Vc (généré par le module I/O 524) qui sera appliqué au film PDLC 434 .

Comme on le voit, le troisième mode de réalisation est tout à fait adapté à la mise en oeuvre de l'éclairage dit « dynamique » ou « réactif » , dont on connaît le grand intérêt puisqu'il permet non seulement de réduire la consommation électrique de la lampe au strict minimum - en venant réduire l'éclairage à ce qui est nécessaire lorsque l'objet éclairé est proche du capteur 560 - mais également accroît le confort d'utilisation en évitant les situation d'éblouissement (par exemple en commandant un faisceau court et large avec une puissance réduite lorsque le porteur de la lampe fait face à un autre utilisateur).

Au delà de ces avantages résultant de l'éclairage « dynamique », le troisième mode de réalisation qui est illustré dans la figure 5 permet en outre de venir remplacer, ajouter ou combiner à la boucle de régulation interne déjà existante, une possibilité de régulation supplémentaire - de niveau supérieure - qui sera effectuée sous le contrôle du dispositif 300.

En effet, comme pour les deux premiers modes de réalisation, le module de commande 520 peut mettre à profit l'existence des deux liaisons montantes et descendantes établies avec le dispositif mobile 300 de manière à transmettre à ce dernier, suivant la liaison montante, toute information représentative du fonctionnement de la lampe et notamment la puissance émise, l'angle de diffusion appliqué mais aussi tout paramètre caractéristique de la boucle de régulation interne déjà utilisée.

Inversement, la liaison descendante pourra à présent servir pour venir échanger, non seulement des valeurs de réglage de la puissance et/ou la diffusion mais également tous autres paramètres susceptibles de venir modifier ou affiner le processus de régulation « dynamique » à appliquer par la lampe, et notamment venir régler conjointement la puissance et le coefficient de diffusion du dispositif 434 en modifiant la tension Vc.

Ainsi, diverses réalisations sont possibles. Soit la boucle de régulation externe mise en oeuvre au sein du dispositif 300 sera substituée à la boucle interne, soit elle viendra en complément pour venir enrichir et affiner la boucle interne déjà présente.

De cette façon, le film PDLC devient soit complètement transparente lorsqu'une tension Vc élevée est appliquée, n'entraînant aucune dispersion du faisceau lumineux, soit diffuse lorsque aucune tension n'est appliquée, dispersant alors le faisceau lumineux dans toutes les directions. On peut donc passer sur une simple commande d'un faisceau focalisé à un faisceau diffus. Comme dans le cas du second mode de réalisation, on utilisera de préférence une LED dite pointue, c'est-à-dire produisant un faisceau lumineux le plus étroit possible en combinaison avec un tel film PDLC.

Comme on le voit dans la figure, c'est l'unité I/O 524 qui permet la génération de la tension de polarisation Vc. Ou, dans le cas où cela s'avère utile, le contrôleur PDLC spécifique (non représenté sur la figure) commandé par le module 524 qui permet de générer le potentiel Vc souhaité. Les circuits électroniques permettant la réalisation d'un tel contrôleur, notamment à base de convertisseurs de tension de type « *boost* », sont bien connus d'un homme du métier et ne seront pas décrits plus précisément. Il suffit de préciser que le contrôleur PDLC est à la fois connecté au dispositif 434 (film PDLC) et au processeur 521 via le module 524. Le contrôleur PDLC reçoit une instruction du processeur 521 et applique la tension correspondante aux bornes de la couche ou du film PDLC du dispositif 434. Dans un mode de réalisation particulier, le contrôleur PDLC est également en mesure de répondre à une requête émise par le processeur 521 et de transmettre en réponse la valeur actuelle de la tension aux bornes du film PDLC du dispositif 434..

Ainsi, comme on le voit, le système de traitement de l'information mobile 300 peut contrôler (ie lire des valeurs ou envoyer des commandes pour de nouvelles valeurs) à tous les modules présents, en envoyant des requêtes de lecture ou de commande qui seront interprétées par le processeur 521 et convertis en signaux de commande puis routés vers le module correspondant.

Les éléments structurels du troisième mode de réalisation ayant été décrits en relation avec la figure 5, il est à présent possible de s'attarder plus spécifiquement sur les bénéfices apportés par un tel mode de réalisation, notamment en terme de nouvelles fonctionnalités.

A cet effet, il paraît utile tout d'abord de récapituler les différents paramètres contrôlables par le système de traitement de l'information mobile 300 ainsi que les messages liés à ce paramètre à la fois en liaison montante ou descendante :

| Paramètre | Liaison Montante | Liaison Descendante |
|---|---|---|
| Etat de Charge de la batterie | Valeur représentative de l'état de charge transmise | Requête de lecture de l'état de charge |
| Capteur Optique | Valeur représentative de la luminosité mesurée transmise | Requête de lecture de la luminosité |
| Puissance lumineuse | Valeur représentative de la puissance lumineuse transmise | . Requête de commande de la puissance lumineuse. |
| | | . Requête de lecture de la puissance lumineuse. |
| Coefficient de Diffusion | Valeur représentative du coefficient de diffusion | . Requête de commande du coefficient de diffusion. |
| | | . Requête de lecture du coefficient de diffusion. |

### Second scénario d'utilisation :

Il sera à présent décrit plus spécifiquement un exemple de réalisation de ce fonctionnement de la lampe en mode « dynamique » ou « réactif » tel qu'exposé dans la demande de brevet WO2009/133309 de la demanderesse, pour mettre en évidence comment on parvient à accroître la performance et l'efficacité de la lampe.

Globalement la lampe frontale va modifier, par l'intermédiaire du système de traitement de l'information mobile, à la fois sa puissance lumineuse ainsi que le coefficient de diffusion de la couche PDLC en réponse à des mesures réalisées par le capteur optique.

L'application dédiée sur le système de traitement de l'information mobile 300 va donc recevoir sur la liaison montante, soit périodiquement à l'initiative de la lampe soit sur requête, les valeurs de luminosité mesurées et émettre sur la liaison descendante des commandes de régulation de la puissance lumineuse et du coefficient de diffusion.

Cette fonctionnalité de commande à distance depuis l'application dédiée offre de multiples avantages, notamment sur le plan de la complexité des algorithmes de mise en oeuvre, de la flexibilité de son fonctionnement. D'abord, l'application dédiée pourra sélectivement obtenir une valeur de la luminosité ambiante et de la luminosité induite par la réflexion de la lampe avant de contrôler les valeurs de puissance lumineuse et du coefficient de diffusion.

Pour obtenir la valeur de la luminosité ambiante, l'application dédiée enverra par l'intermédiaire du système de traitement de l'information mobile d'abord une commande d'extinction de la lampe (puissance lumineuse à zéro) suivi de manière presque simultanée par une commande de lecture de luminosité. On pourra bien sûr remplacer ces deux émissions de commande par une commande spécifique de lecture de luminosité ambiante que le processeur 521 de la lampe interprétera comme une liste séquentielle d'actions à réaliser :
1) éteindre la LED 431
2) mesurer la luminosité sur le capteur 560
3) rétablir la puissance de la LED à sa valeur précédant l'extinction et
4) transmettre sur la liaison montante la valeur de luminosité mesurée par le capteur.

Ayant obtenue par la suite une valeur de luminosité sans extinction de la lampe par une commande de lecture de luminosité simple, l'application dédiée pourra en comparant les deux valeurs obtenir une valeur de réflexion lumineuse induite et donc une indication de proximité d'objets éclairés réfléchissant.

En ayant comme paramètres d'entrée ces deux valeurs de luminosité, l'application dédiée est à même de décider à la fois la puissance lumineuse et le coefficient de diffusion adéquats.

L'application dédiée pourra aussi se servir de données annexes comme le mode d'utilisation (mode jogging, mode spéléologie ... ) et de données GPS.

Un exemple typique est le cas où l'utilisateur de la lampe éclaire à courte distance le visage d'une autre personne. L'application dédiée va mesurer alors une forte valeur de réflexion lumineuse (lumière de la lampe réfléchie par le visage) et en réaction va commander la lampe de diminuer sensiblement sa puissance lumineuse tout en augmentant le coefficient de diffusion du diffuseur PDLC commandable afin d'élargir le faisceau.

Si par contre aucune réflexion de lumière n'est mesurée, il sera alors judicieux d'augmenter le coefficient de diffusion de la lumière voire aussi réduire la puissance lumineuse.

Il est clair aussi que selon le mode d'utilisation en cours, la lampe frontale doit se comporter différemment : Ainsi en mode footing, les risques d'éblouissement mutuel sont faibles, et il sera donc bon d'augmenter le temps de réaction de la lampe. Par contre, la luminosité ambiante est sujette à de grandes variations (parcours en ville, sous des arbres ...) et devra donc être mesurée plus régulièrement. Les données GPS pourront aussi aider à prévenir les changements de situation (passage de ville à campagne ...) ou tout simplement à permettre de venir élargir le faisceau lumineux lorsque le porteur de la lampe approche d'une bifurcation qui doit appeler son attention pour éviter tout égarement.

Dans un mode de réalisation particulier, la lampe intègre en outre une boussole électronique qui permettra le transmission, sur la liaison montante, d'une information correspondant à la direction vers laquelle regarde le porteur de la lampe. Le dispositif mobile reçoit cette information et, en combinaison avec les données GPS et le schéma de parcours préprogrammé, peut transmettre une information de commande adéquate via la liaison descendante pour permettre la génération d'un signal d'alerte adéquat, notamment lorsque le porteur de la lampe arrive à une bifurcation et, apparemment, regarde vers la mauvaise direction. Le signal d'alerte pourra être un clignotement de la lampe ou une baisse significative de l'intensité lumineuse lorsque le porteur de la lampe regarde par mégarde la mauvaise direction dans la bifurcation considéré. Il ne s'agit clairement, ici, que d'un exemple particulier montrant la grande synergie résultant de la combinaison de la lampe avec le dispositif mobile, via les deux liaisons montantes et descendantes.

En mode spéléologie par contre, ces changements de luminosité ambiante seront moins fréquents, et le risque d'éblouissement mutuel plus important. L'application dédiée pourra donc réduire la fréquence des mesures de luminosité ambiante et diminuera la latence de réaction de la lampe.

On voit ainsi tous les enrichissements et la granularité supplémentaire qu'un tel mode de réalisation peut apporter au fonctionnement d'une lampe « dynamique » ou « réactive » originellement introduit par la demanderesse. Tout d'abord le fait de pouvoir à la fois obtenir une valeur de luminosité ambiante ainsi que des valeurs de luminosité périodiques combinées à des données GPS et au mode de fonctionnement programmé, l'application dispose de multiples paramètres d'entrée qui lui permettront de mieux déterminer la situation d'éclairement adéquat pour l'utilisateur. Enfin le fait de pouvoir commander à la fois la puissance lumineuse et le coefficient de diffusion du diffuseur électriquement commandable PDLC apporte une granularité supplémentaire à la lampe et enrichit la palette d'éclairage possible.

### Complément au premier scénario d'utilisation :

Les mesures de luminosité ambiante (par extinction de la lampe) et de mesure courante (lampe allumée) qui ont été exposées plus haut peuvent bien sûr enrichir tous les autres scénarios de fonctionnement comme par exemple la fonctionnalité d'autonomie garantie évoquée précédemment.

Ainsi la mesure de luminosité ambiante pourra servir à calculer en plus des autres paramètres évoqués dans le premier scénario, une puissance lumineuse de référence à respecter (soit comme puissance moyenne soit comme puissance maximum).

Les mesures de luminosité actuelle (ie lampe allumée) servent ensuite à compléter le fonctionnement en mode « dynamique » ou « réactif » de la lampe frontale par l'ajustement de la puissance lumineuse en fonction de cette valeur de référence.

### Troisième scénario d'utilisation :

Dans ce troisième scénario, on va présenter un procédé tirer avantage du couplage entre lampe frontale et le système de traitement de l'information mobile pour générer une situation d'alerte, notamment en situation d'urgence ou lors de la détection d'un incident.

Le risque d'accident est en effet accru en situation de faible luminosité et lorsqu'un accident survient, il est alors primordial de permettre la localisation de la personne à secourir.

On va voir dans la suite comment la lampe et le système de traitement de l'information mobile peuvent avantageusement se partager des tâches successives.

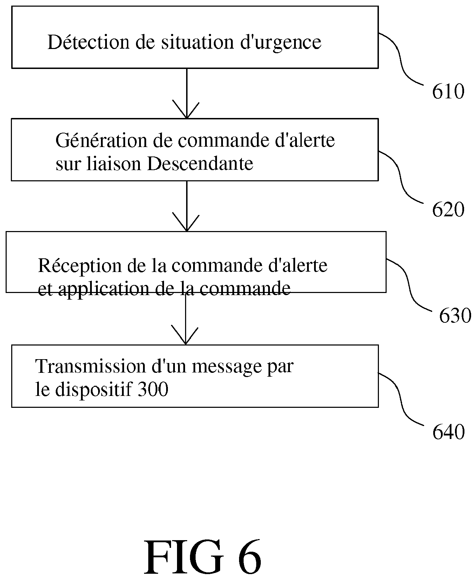

La figure 6 représente un diagramme permettant de mieux comprendre la succession d'étapes réalisées :
Le scénario commence par une étape 610 de détection de situation d'urgence par le système de traitement de l'information mobile.

Une telle situation pourra être détectée à partir de données GPS montrant une immobilité de la personne au-delà d'un temps prédéfini. Elle pourra aussi être initiée par l'utilisateur sur l'application dédiée.

Afin d'éviter toute fausse alarme, l'application pourra permettre pendant un cours instant l'annulation de la procédure d'alarme par l'utilisateur, en attirant tout d'abord l'attention de l'utilisateur vers l'application dédiée. Un moyen pour attirer cette attention est par exemple de laisser vibrer le système de traitement de l'information mobile ou d'émettre une sonnerie.

Après l'écoulement de ce délai de réaction, et sans aucune réaction de l'utilisateur, le procédé engage une étape 620 au cours de laquelle, le système de traitement de l'information mobile 300 va générer une commande d'alerte sur la liaison descendante à destination de la lampe frontale. Cette commande d'alerte pourra contenir une commande d'éclairage d'urgence pour la lampe frontale. Cette commande pourra contenir une commande de puissance lumineuse ainsi qu'une commande de diffusion, respectivement pour le module de puissance 410 et le dispositif 434. Elle pourra contenir en outre une valeur de fréquence de clignotement à appliquer.

Puis, dans une étape 630, cette commande d'alerte est reçue par la lampe. Une fois détectée par le module émetteur-récepteur la commande est interprétée par le processeur 521 de la lampe 500, et les différents paramètres contenus dans cette commande sont appliqués aux modules correspondants.

Ainsi la lampe se mettra à clignoter à la fréquence indiquée tout en appliquant la puissance lumineuse et le coefficient de diffusion qui ont été prescrits par le dispositif de traitement mobile en communication avec la lampe frontale.

La mise en place d'un protocole de répétition de type ARQ évoqué plus haut pourra entrainer la répétition de l'étape 620 si aucun acquittement de réception ACK n'est reçu au bout d'un temps déterminé, ou bien si un non-acquittement NACK est reçu par le système de traitement de l'information mobile en provenance de la lampe frontale.

Au cours d'une étape 640 , qui pourra soit être antérieure, postérieure ou simultanée aux étapes 620 et 630, un SMS d'alerte et/ou un appel d'alerte contenant si disponible des données GPS pourra être émis par le système de traitement de l'information mobile.

Le procédé décrit dans la figure 6 peut servir dans diverses applications. C'est notamment le cas lorsque l'étape 610 résulte de la détection d'un incident de parcours, lorsque par exemple les données GPS recueillies par le dispositif 300 montrent que le porteur de la lampe s'égare ou s'éloigne d'un intinéraire prédéfini à l'avance.

Dans ce cas, l'étape 620 servira alors à la génération d'une commande d'alerte sur la liaison descendante, qui sera ensuite reçue par le module de commande 520 dans le but de générer un clignotement d'alerte, avec une fréquence donnée, de manière à informer le porteur de la lampe qu'il se trompe de chemin ou qu'il est sur le point de s'égarer...

Ces deux exemples montrent le grand intérêt que l'on peut trouver à venir délocaliser les paramètres de fonctionnement de la lampe ( puissance, angle de diffusion), au sein du dispositif mobile 300.

Mais des fonctionnalités encore plus performantes sont possibles en intégrant les lampes au sein d'un groupement collectif constituant un véritables réseau de lampes, comme on va le voir avec le quatrième mode de réalisation.

### 4) Quatrième mode de réalisation : le réseau de lampes frontales

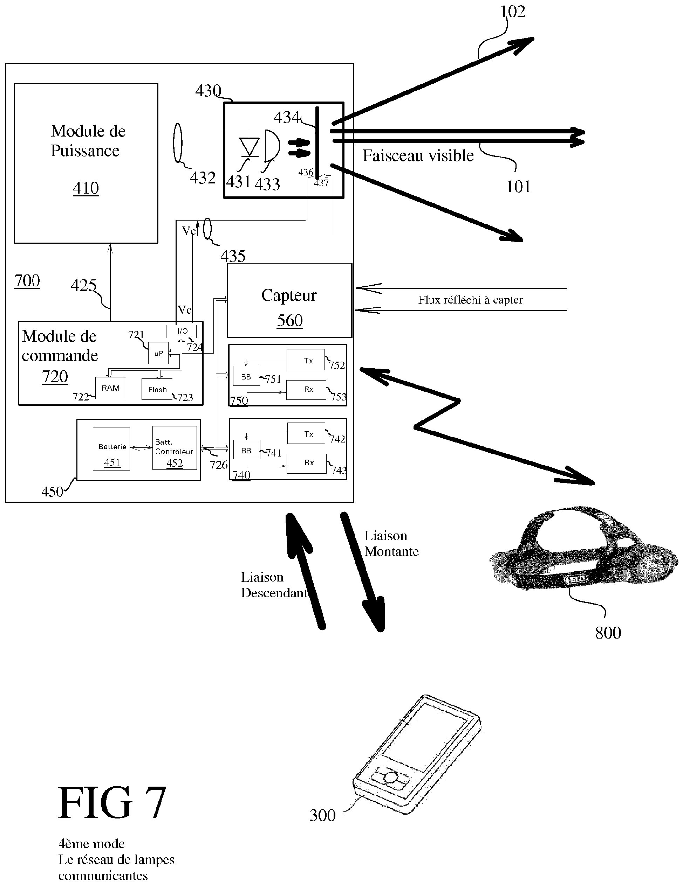

Ce quatrième mode de réalisation illustré dans la figure 7 est axé sur les fonctionnalités réseaux offertes par les moyens de communication bidirectionnels présents sur la lampe.

En effet la lampe gagne en fonctionnalités non seulement en communiquant avec son système de traitement de l'information mobile mais aussi en communiquant au sein d'un réseau plus étendu de type ad-hoc pouvant comprendre plusieurs lampes (une lampe 800 est illustrée dans la figure 6) et plusieurs systèmes de traitement de l'information associés.

Le quatrième mode est illustré dans la figure 7 où l'on voit une lampe frontale 700 qui comporte - outre les modules 410, 430, 450 et 560 déjà décrits en relation avec le troisième mode de réalisation (et dont les éléments conservent leur références numériques) - un premier module émetteur-récepteur 750 comportant un module en bande de base 751 et deux modules de transmission et de réception 752 et 753 fonctionnant de préférence sous le standard IEEE 802.11 dont une sous-composante est connue sous le nom de *Wireless LAN.* Ce standard permet une communication en réseau de type ad-hoc.

Dans un mode de réalisation particulier, la lampe frontale comprendra un deuxième module émetteur-récepteur 740 comportant son module en bande de base 741 et ses deux modules de transmission et de réception 742 et 743 fonctionnant sous le standard *Bluetooth* et de préférence le standard *Bluetooth 4.0 low energy.* Ce deuxième module émetteur-récepteur sous Bluetooth 740 sera dédié à la communication entre la lampe frontale et son système de traitement de l'information mobile dédié, tandis que le premier module sous W-LAN sera pour les communications entre lampes frontales et systèmes de traitement de l'information mobiles présents dans le réseau ad-hoc créé.

Outre ces deux modules émetteur-récepteur 740 et 750, la lampe 700 comporte en outre un module de commande 720 comportant un processeur 721 avec sa mémoire volatile RAM 722 et non volatile 723 associée et des circuits d'entrées sorties 724, qui est capable d'interfacer tous les modules existants dans ce quatrième mode de réalisation, et notamment les deux modèles émetteurs/récepteurs 740 et 750 de manière à pouvoir, d'une part, venir lire les paramètres et informations qui y sont stockées mais aussi, d'autre part, à venir y inscrire des information et paramètres de commande destinés à commander le fonctionnement de ses modules sous le contrôle du dispositif de communication mobile 300.

L'on obtient ainsi très avantageusement une lampe capable de communiquer non seulement avec le dispositif mobile 300 - et de bénéficier ainsi de la puissance de calcul présente dans ce dernier - mais également avec d'autres lampes de même type, comme la lampe 800 de manière à constituer un réseau collectif de lampes permettant de mutualiser les différentes informations et ressources disponibles.

Ainsi, la lampe 700 n'est plus seulement en communication avec son système de traitement de l'information dédié 300 mais elle est aussi en communication avec d'autres lampes frontales telle que la lampe 800 illustré et d'autres systèmes de traitement de l'information mobiles 596, 598 and 599.

La grande différence avec les précédents modes de réalisation réside dans la multiplicité des entités émettrices et réceptrices de paquets de données.

Dans un réseau ad-hoc, chaque entité membre (aussi bien les lampes frontales que les systèmes de traitement de l'information mobile) reçoit un identifiant réseau. Chaque paquet émis sur le réseau contient dans un entête l'identifiant à la fois de l'entité émettrice et de l'entité destinatrice du message.

On pourra prévoir des identifiants de groupe pour des communications de type multidiffusion (*multicast*) ou rediffusion (*broadcast*) où une entité émettrice s'adresse à plusieurs entités destinatrices.

Le processeur 721 devra donc dans un premier temps pour chaque paquet détecté identifier l'entité émettrice du paquet et l'entité destinatrice de ce paquet. Si le paquet ne lui est pas destiné, le processeur 721 va ré émettre ce paquet, ie le relayer. La lampe joue alors le rôle de relai de transmission. On voit ainsi que par ces procédés de réémission ou re routage de paquets, une portée bien plus grande de réseau peut être atteinte, pouvant couvrir un cortège de porteurs de lampes. Si le paquet lui est effectivement destiné, le processeur 721 va ensuite, comme cela a été vu ci-dessus, interpréter le message contenu dans celui-ci et le mettre en oeuvre. Afin d'éviter des conflits de commande entre entités émettrices, la lampe considérera toujours en priorité, dans un mode de réalisation spécifique, les messages provenant de son système de traitement de l'information dédié. Parmi toutes les autres lampes et tous les autres systèmes de traitement de l'information mobiles, un système de traitement de l'information mobile pourra dans certains scénarios être configuré comme noeud maître du réseau ad-hoc et les commandes envoyés par ce noeud maître supplanteront toutes les autres commandes reçues.

L'application dédiée 350 sur le système de traitement de l'information mobile 300 dédiée à la lampe frontale 700 dispose d'une fonctionnalité de configuration du réseau ad-hoc entre toutes les lampes et tous les autres systèmes de traitement de l'information mobiles. Chaque entité du réseau reçoit alors son identifiant de réseau et des identifiants de groupe peuvent être créés.

Pour illustrer la grande flexibilité de ce mode de réalisation, nous allons décrire plus précisément des exemples de nouvelles fonctionnalités permises par ce nouveau mode de réalisation.

### Quatrième scénario d'utilisation :

Le quatrième scénario concerne une commande d'éclairage en fonction d'une distance mesurée entre deux entités du réseau.

En prenant l'exemple concret d'une marche nocturne avec plusieurs participants qui se suivent les uns derrière les autres, on voit que chaque lampe aura des besoins d'éclairage distincts en fonction de la position de son porteur au sein du cortège complet. En particulier, la lampe en tête de cortège devra fournir plus de puissance pour éclairer devant elle une zone obscure tandis que chaque lampe derrière celle-ci ne devra éclairer que l'espace entre elle et la lampe devant elle.

Il apparaît donc judicieux d'apporter une fonctionnalité permettant de calculer la distance entre deux lampes afin de pouvoir réguler la puissance lumineuse en fonction de cette distance.

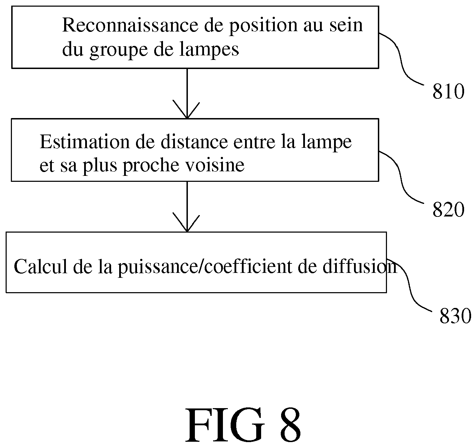

On a représenté sur la figure 8 un diagramme permettant de mieux comprendre l'enchainement d'étapes se produisant.

La méthode commence par une étape 810 de reconnaissance de position. Soit la position de chacune des lampes suit un ordre fixé par avance et donc chaque lampe sait si elle a une autre lampe devant elle ou non, et si oui elle connaît l'identifiant réseau de cette lampe.

Soit l'application dédiée obtient cette position relative par échange de données GPS entre les différents systèmes de traitement de l'information mobile.

Si la lampe frontale à l'issue de cette étape est en première position, ie n'a pas de lampe frontale située devant lui, elle fonctionne selon le deuxième scénario évoqué plus haut (fonctionnement en mode dynamique évolué utilisant les boucles internes et externes de régulation)

Si par contre la lampe est reconnue comme ayant une autre lampe frontale devant elle - dont elle connaît l'identifiant à l'issue de cette première étape - la méthode se poursuit avec une étape 820, au cours de laquelle, le procédé détermine en permanence la distance séparant ces deux lampes. Cette mesure de distance peut se faire soit par l'échange de données GPS entre les deux systèmes de traitement de l'information mobile dédiés à ces deux lampes mais cela s'avère être une méthode complexe en calcul, soit on pourra avoir recours à une méthode plus simple de mesure de puissance de signal reçu (connu sous le nom de *RSSI measurement* en Anglais) sur les paquets régulièrement émis à cet effet par chaque lampe. Ainsi notre lampe 700 connaît à l'issue de l'étape 810 l'identifiant de la lampe située devant elle. Elle va donc repérer les paquets émis par cette lampe et mesurer sur chacun de ces paquets la puissance reçue (le RSSI). En fonction de ce RSSI mesuré et de la connaissance de la puissance d'émission (la même supposé pour chaque lampe), l'atténuation dû à la propagation peut être déterminée. Cette atténuation permet alors une estimation de la distance de propagation et donc la distance entre les deux lampes. Cette étape peut se dérouler au choix dans la lampe ou bien dans le système de traitement de l'information mobile qui pourra fort avantageusement mettre à disposition sa puissance de calcul à cet effet.

Puis le procédé se poursuit avec une étape 830, au cours de laquelle soit le processeur de la lampe soit l'application dédiée sur le système de traitement de l'information mobile va calculer une puissance lumineuse et un coefficient de diffusion approprié et, le cas échéant, transmettre des commandes correspondantes sur la liaison descendante de la lampe considérée.

Ainsi à l'issue de cette étape 830, la puissance lumineuse et le coefficient de diffusion de la lampe sont modifiés en tenant compte de la distance entre les deux lampes, ou tout autre paramètre opportun.

Comme on le voit, on arrive ainsi à optimiser ainsi à la fois l'éclairage de chacune des lampes tout en économisant la puissance et donc la batterie de chacune des lampes.

### Complément aux trois premiers scénarios d'utilisation:

Un corollaire particulièrement remarquable au troisième scénario qui vient d'être décrit découle de la possibilité de venir introduire **la notion de garantie d'autonomie de groupe.**

Ainsi, par ces communications multiples au sein du réseau de lampes frontales, pilotées ou non par leurs dispositif de traitement de données associés, on ne garantit plus seulement l'autonomie d'une seule lampe mais l'autonomie d'un groupe complet de lampes. On veut ainsi garantir que pendant une valeur d'autonomie de x heures garantie, aucune des lampes de ce groupe ne se retrouvera dans une situation critique au regard de la charge de batterie.

Ce scénario se rapproche du premier scénario mais il s'agit désormais de coordonner l'ensemble des lampes.

Dans ce scénario évolué, deux paramètres supplémentaires sont à prendre en compte : l'agencement des lampes et la distance entre lampes. Afin d'économiser la batterie de la lampe en tête de cortège, il sera judicieux d'émettre des commandes afin de permuter l'ordre des lampes afin que chacune des lampes se relaie en première position. Ainsi en fonction de tous les paramètres du premier scénario plus de la position relative des lampes et la distance entre chacune des lampes comme calculée dans le quatrième scénario, chaque application dédiée ou bien une seule application dédiée et désignée comme maître vont calculer la puissance lumineuse à fournir, le coefficient de diffusion ainsi que l'éventuelle permutation de l'ordre de chacune des lampes et transmettre ces commandes à chacune des lampes.

Le deuxième scénario du mode « dynamique » ou « réactif » peut aussi être enrichi par cette fonctionnalité de réseau en combinant judicieusement le deuxième et le quatrième scénario ci-dessus.

Ainsi la commande de puissance lumineuse et du coefficient de diffusion calculée et envoyée sur la liaison descendante pourra être déterminée en fonction d'un paramètre supplémentaire étant la distance estimée entre les deux lampes. Ainsi donc en fonction de la distance estimée entre les deux lampes, de la luminosité ambiante ainsi que des valeurs de luminosité périodiques combinées à des données GPS et au mode de fonctionnement programmé, l'application dispose de multiples paramètres d'entrée qui lui permettront de mieux déterminer la situation d'éclairement adéquat pour l'utilisateur.

Le troisième scénario d'urgence peut lui aussi être enrichi par ces fonctionnalités de réseau. Ainsi on vient ici modifier l'étape 402 exposée plus haut ou le message de commande émis par le système de traitement de l'information mobile sera à destination de toutes les lampes et pas seulement de la lampe dédiée. Ainsi tous les membres du réseau seront informés de la situation d'urgence de l'un de leur membres et pourront agir en conséquence, d'autant plus que les coordonnées GPS de ce membre en situation d'urgence leur seront communiqués.

Comme on le voit les possibilités d'applications sont multiples, et l'on peut évoquer, comme autant d'exemples et de possibilités différentes, les domaines d'applications suivants :
**Gestion** :
   - gestion d'un parc matériel de lampes ou d'une flotte de lampe (collectivités, guides, loueurs, ...)
   - gestion de l'énergie (adaptation de la puissance au parcours - autonomie garantie - partage et distribution de l'énergie au sein de la flotte)
**Santé** :
   - conditions physiques ;
   - performances ;
   - informations physiologiques
   - coach, entraîneur,
   - fréquence cardiaque, gestion du stress
   - appel de secours ...
**Evènements et compétitions :**
   - lampes en réseau ;
   - départs de course
   - détection de l'arrivée
   - communications entre les lampes
**Echange et partage**
   - réseau social
   - conseils
   - mises à jour
   - alertes
   - forum
   - nouveautés
   - profils
   - parcours, bon plans
   - secours , entraide
**Dialogue homme-machine**
   - lampe à commande vocale
   - mains libres
   - codes gestuels
   - applications en médecine
**Photo-vidéo** - **couleurs**
   - musique d'ambiance selon le terrain
   - lumière en fonction de la musique
   - rythmes
   - andy warhol
   - soirées
   - balance des blancs, 65536 couleurs
   - accessoire photo-vidéo - flash
Et également **quelques fonctions diverses supplémentaires** :
   - lampe réveil (simulateur d'aube, ambiance lumineuse, détente yoga, aide à l'endormissement)
   - lampe GPS (localisation traceur, apprentissage de parcours, guidage, géo-catching, géolocalisation )
   - lampe station météo (vitesse du vent, hygrométrie, changements climatiques )

Ces différents domaines d'application n'épuisant certainement pas toutes les possibilités offertes par l'invention.

## Revendications

1. Système d'éclairage comprenant une lampe portative (100, 400, 500), par exemple frontale, et un téléphone intelligent (300), la lampe portative (100, 400, 500) comportant:
une unité d'éclairage (230, 430), comportant au moins une LED, (231, 431), apte à émettre un faisceau lumineux avec puissance lumineuse réglable,
un module de commande (220, 420, 520) apte à générer un signal de commande (225, 425) de la puissance lumineuse générée par ladite unité d'éclairage,
un module de puissance (210, 410) apte à régler l'intensité lumineuse dudit faisceau lumineux de l'unité d'éclairage en fonction du signal de commande de la puissance lumineuse générée par le module de commande,
une batterie (251, 451) des moyens de détection de l'état de charge de ladite batterie, et des moyens de communication bidirectionnels sans fil (240, 440, 740) pour établir une liaison montante et une liaison descendante entre la lampe portative et le téléphone intelligent, et
le téléphone intelligent (300), comportant :
des moyens de communication bidirectionnels sans fil configurés pour communiquer via lesdites liaisons montante et descendante, et
une application dédiée (350) stockée dans la mémoire du téléphone,
dans lequel système d'éclairage ladite lampe portative est apte à transmettre via ladite liaison montante des informations représentatives du fonctionnement de la lampe, comportant au moins une information représentative de l'état de charge de la batterie,
le système d'éclairage étant **caractérisé en ce que** :
ladite application dédiée (350) est apte à calculer l'état de charge actuel de la batterie,
ladite application dédiée (350) est apte à calculer une valeur moyenne de puissance délivrée par le module de puissance (210, 410), la valeur moyenne de puissance étant calculée en fonction de l'état de charge actuel de la batterie ainsi que d'une durée d'autonomie de la lampe portative qui est soit:
- saisie par l'utilisateur comme paramètre correspondant à une durée estimée d'une excursion en heures ou minutes, ou
- extraite d'une bibliothèque personnelle de l'utilisateur, ou
- calculée par ladite application dédiée (350) en fonction de données GPS comme l'ensemble du parcours à réaliser et la vitesse de progression, ou
- calculée à partir d'informations stockées sur un serveur distant et téléchargées par ladite application dédiée (350),
ladite application dédiée (350) est apte à associer à la valeur de puissance moyenne calculée un signal de commande de puissance lumineuse correspondant,
ledits moyens de communication bidirectionnels sans fil dudit téléphone intelligent sont aptes à transmettre via ladite liaison descendante ledit signal de commande de puissance lumineuse correspondant à la lampe portative et ,
ledit module de puissance (210, 410) est apte à ajuster la puissance lumineuse de la lampe portative en fonction du signal de commande de puissance lumineuse reçu par la lampe portative.

2. Système d'éclairage selon la revendication 1 dans lequel la durée d'autonomie est un paramètre calculé par ladite application dédiée (350) en fonction des données GPS comme l'ensemble du parcours à réaliser et la vitesse de progression.

3. Système d'éclairage selon la revendication 1 **caractérisée en ce que** ladite lampe portative comporte un photocapteur destiné à générer une information de luminosité , ladite lampe portative étant configurée pour transmettre ladite information audit téléphone intelligent (300) via la liaison montante, et, dans lequel ladite application dédiée (350) utilise l'information générée par le photocapteur pour calculer le signal de commande de puissance.

4. Système d'éclairage selon la revendication 3 dans lequel ledit photocapteur opère dans le domaine visible et/ou infra-rouge.

5. Système d'éclairage selon l'une quelconque des revendications 1 à 4 dans lequel la lampe portative comporte des moyens de commande de géométrie du faisceau lumineux généré par l'unité d'éclairage pilotés par une information de commande de géométrie calculée par l'application dédiée (350) et transmise via la liaison descendante.

6. Procédé de commande du fonctionnement d'une lampe portative (100, 400, 500), par exemple frontale, par un téléphone intelligent (300), la lampe portative comportant:
une unité d'éclairage (230, 430), comportant au moins une LED (231, 431), apte à émettre un faisceau lumineux avec puissance lumineuse réglable,
un module de commande (220, 420, 520) apte à générer un signal de commande (225, 425) de la puissance lumineuse générée par ladite unité d'éclairage,
un module de puissance (210, 410) apte à régler l'intensité lumineuse dudit faisceau lumineux de l'unité d'éclairage en fonction du signal de commande de la puissance lumineuse générée par le module de commande,
une batterie (251, 451),
des moyens de détection de l'état de charge de ladite batterie, et
des moyens de communication bidirectionnels sans fil (240, 440, 740) pour établir une liaison montante et une liaison descendante entre la lampe portative et le téléphone intelligent, et le téléphone intelligent (300) comportant :
des moyens de communication bidirectionnels sans fil configurés pour communiquer via lesdites liaisons montante et descendante, et
une application dédiée (350) stockée dans la mémoire dudit téléphone, dans lequel procédé de commande ladite lampe portative transmet via ladite liaison montante des informations représentatives du fonctionnement de la lampe, comportant au moins une information représentative de l'état de charge de ladite batterie,
ledit procédé de commande étant **caractérisé par** les étapes suivantes:
ladite application dédiée (350) calcule l'état de charge actuel de ladite batterie;
ladite application dédiée (350) calcule une valeur moyenne de puissance délivrée par le module de puissance (210, 410), la valeur moyenne de puissance étant calculée en fonction de l'état de charge actuel de la batterie ainsi que d'une durée d'autonomie de la lampe portative, cette durée d'autonomie étant soit:
- saisie par l'utilisateur comme paramètre correspondant à une durée estimée d'une excursion en heures ou minutes, ou
- extraite d'une bibliothèque personnelle de l'utilisateur, ou
- calculée par ladite application dédiée (350) en fonction de données GPS comme l'ensemble du parcours à réaliser et la vitesse de progression, ou
- calculée à partir d'informations stockées sur un serveur distant et téléchargées par ladite application dédiée (350);
ladite application dédiée (350) associe à la valeur de puissance moyenne calculée un signal de commande de puissance lumineuse correspondant;
lesdits moyens de communication bidirectionnels sans fil dudit téléphone intelligent transmettent via ladite liaison descendante ledit signal de commande de puissance lumineuse correspondant à la lampe portative; et,
ledit module de puissance (210, 410) ajuste la puissance lumineuse de la lampe portative en fonction du signal de commande de puissance lumineuse reçu par la lampe portative.

7. Procédé de commande selon la revendication 6 dans lequel la durée d'autonomie est calculée par ladite application dédiée (350) en fonction des données GPS comme l'ensemble du parcours à réaliser et la vitesse de progression.

8. Procédé de commande selon la revendication 6, **caractérisé en ce qu'**il comporte les étapes :
- détection de la luminosité présente face à ladite lampe portative au moyen d'un photocapteur ;
- la transmission audit téléphone intelligent d'une information représentative de ladite luminosité captée par le photocapteur.

9. Procédé de commande selon la revendication 6 dans lequel la géométrie du faisceau lumineux généré par la lampe portative est commandée par une information de commande de géométrie calculée par ladite application dédiée (350) et transmise par ledit téléphone intelligent à ladite lampe portative via la liaison descendante.

10. Procédé de commande selon la revendication 6 dans lequel ledit téléphone intelligent (300) détecte une situation d'urgence et transmet sur la liaison descendante vers la lampe portative une commande d'alerte commandant la génération d'un signal d'alarme lumineux.

11. Procédé de commande selon la revendication 10 dans lequel la situation d'urgence résulte de l'exploitation de données GPS pour déterminer une bifurcation devant attirer l'attention de l'utilisateur de la lampe portative ou pour informer celui-ci qu'il s'éloigne d'un chemin prédéterminé.

## Patentansprüche

1. Beleuchtungssystem mit einer tragbaren Lampe (100, 400, 500), wie etwa einer Stirnlampe, und einem Smartphone (300),
wobei tragbare Leuchte (100, 400, 500) umfasst:
eine Beleuchtungseinheit (230, 430) mit mindestens einer LED (231, 431), die einen Lichtstrahl mit einstellbarer Leuchtkraft erzeugen kann,
ein Steuermodul (220, 420, 520), das ein Steuersignal (225, 425) zur Steuerung der von der Beleuchtungseinheit erzeugten Beleuchtungsleistung erzeugen kann,
ein Leistungsmodul (210, 410), das beschaffen ist, die Beleuchtungsleistung des Beleuchtungsstrahls der Beleuchtungseinheit als Reaktion auf das von dem Steuermodul erzeugte Steuersignal zur Steuerung der Beleuchtungsleistung einzustellen,
eine Batterie (251, 451),
Mittel zum Erfassen des Ladezustands der Batterie, und
eine drahtlose bidirektionale Kommunikationseinrichtung (240, 440, 740) zum Herstellen einer Uplink- und einer Downlink-Kommunikation zwischen der tragbaren Lampe und dem Smartphone, und
wobei das Smartphone (300) umfasst:
drahtlose bidirektionale Kommunikationsmittel, die konfiguriert sind, um über die Uplink- und Downlinkverbindung zu kommunizieren;
eine dedizierte Anwendung (350), die in dem Speicher des Smartphones gespeichert ist,
wobei in dem Beleuchtungssystem die tragbare Lampe beschaffen ist, über die Uplinkverbindung Informationen zu übertragen, die für den Betrieb der Lampe repräsentativ sind und mindestens eine Information umfassen, die für den Ladezustand der Batterie repräsentativ ist,
wobei das Beleuchtungssystem **dadurch gekennzeichnet ist, dass**:
die dedizierte Anwendung (350) beschaffen ist, den aktuellen Ladezustand der Batterie zu berechnen,
die dedizierte Anwendung (350) beschaffen ist, einen Mittelwert der von dem Leistungsmodul (210, 410) erzeugten Leistung zu berechnen, wobei der Mittelwert der Leistung als Funktion des aktuellen Ladezustands der Batterie sowie einer Autonomiedauer der tragbaren Lampe berechnet wird, die eine der folgenden ist:
- die vom Benutzer als Parameter eingegeben wird, der einer geschätzten Dauer einer Reise in Stunden oder Minuten entspricht, oder
- die aus der persönlichen Datenbank des Benutzers extrahiert werden, oder
- die von der dedizierten Anwendung (350) in Abhängigkeit von den GPS-Daten oder der Gesamtheit der zu absolvierenden Strecke und der Fortschrittsgeschwindigkeit berechnet wird, oder
- die anhand der auf einem entfernten Server gespeicherten und von der n dedizierten Anwendung (350) heruntergeladenen Informationen berechnet werden,
wobei die dedizierte Anwendung (350) konfiguriert ist, um den Mittelwert der berechneten Leistung ein entsprechendes Steuersignal für die Beleuchtungsleistung zuzuordnen,
wobei die drahtlosen bidirektionalen Kommunikationsmittel des Smartphones konfiguriert sind, um über die Uplinkverbindung das Steuersignal zur Steuerung der Lichtleistung der tragbaren Lampe zu übertragen, und
wobei das Leistungsmodul (210, 410) beschaffen ist, die Beleuchtungsleistung der tragbaren Lampe in Reaktion auf das Steuersignal der Beleuchtungsleistung, das von der tragbaren Lampe empfangen wird, einzustellen.

2. Beleuchtungssystem nach Anspruch 1, wobei die Dauer der Autonomie ein Parameter ist, der von der dedizierten Anwendung (350) als Reaktion auf die GPS-Daten oder den Satz der zu absolvierenden Strecke und die Fortschrittsgeschwindigkeit berechnet wird.

3. Beleuchtungssystem nach Anspruch 1, **dadurch gekennzeichnet, dass** die tragbare Lampe einen Fotosensor umfasst, der konfiguriert ist, um eine Beleuchtungsinformation zu erzeugen, wobei die tragbare Lampe konfiguriert ist, um die Information über die Uplinkverbindung an das Smartphone (300) zu übertragen, und wobei die dedizierte Anwendung (350) die von dem Fotosensor erzeugten Informationen zur Berechnung des Steuersignals für die Leistung verwendet.

4. Beleuchtungssystem nach Anspruch 3, wobei der Fotosensor im sichtbaren oder/und infraroten Bereich arbeitet.

5. Beleuchtungssystem nach einem der Ansprüche 1 bis 4, wobei die tragbare Lampe Steuermittel zur Steuerung der Geometrie des von der Beleuchtungseinheit erzeugten Lichtstrahls umfasst, die durch eine Steuerinformation der Geometrie gesteuert werden, die von der dedizierten Anwendung (350) berechnet und über die Downlinkverbindung übertragen wird.

6. Verfahren zur Steuerung des Betriebs einer tragbaren Lampe (100, 400, 500), wie etwa einer Stirnlampe, über ein Smartphone (300),
wobei die tragbare Lampe umfasst:
eine Beleuchtungseinheit (230, 430), die mindestens eine LED (231, 431) umfasst, die beschaffen ist, einen Lichtstrahl mit einer einstellbaren Lichtleistung zu erzeugen,
ein Steuermodul (220, 420, 520), das ein Steuersignal (225, 425) für die von der Beleuchtungseinheit erzeugte Beleuchtungsleistung erzeugen kann,
ein Leistungsmodul (210, 410), das beschaffen ist, die Beleuchtungsleistung des Beleuchtungsstrahls der Beleuchtungseinheit in Abhängigkeit von dem Steuersignal der Beleuchtungsleistung, das von dem Steuermodul erzeugt wird, einzustellen,
eine Batterie (251, 451),
Mittel zum Erfassen des Ladezustands der Batterie, und
drahtlose bidirektionale Kommunikationsmittel (240, 440, 740) zur Herstellung einer Uplink- und einer Downlinkverbindung zwischen der tragbaren Lampe und dem Smartphone,
wobei das Smartphone (300) umfasst:
drahtlose bidirektionale Kommunikationsmittel, die für die Kommunikation über die Uplink- und Downlinkverbindung konfiguriert sind, und
eine dedizierte Anwendung (350), die in dem Speicher des Smartphones gespeichert ist,
wobei das Steuerungs-Verfahren der tragbaren Lampe über die Uplinkverbindung Informationen überträgt, die für den Betrieb der Lampe repräsentativ sind und mindestens eine Information umfassen, die für den Ladezustand der Batterie repräsentativ ist,
wobei das Steuerungs-Verfahren durch die folgenden Schritte gekennzeichnet ist:
die dedizierte Anwendung (350) berechnet den aktuellen Ladezustand der Batterie;
die dedizierte Anwendung (350) berechnet einen Mittelwert der von dem Leistungsmodul (210, 410) erzeugten Leistung, wobei der Mittelwert der Leistung als Funktion des aktuellen Ladezustands der Batterie sowie einer Autonomiedauer der tragbaren Lampe berechnet wird, wobei diese Autonomiedauer eine der folgenden ist:
- die vom Benutzer als Parameter eingegeben wird, der einer geschätzten Dauer einer Fahrt in Stunden oder Minuten entspricht, oder
- die aus einer persönlichen Datenbank des Benutzers stammen, oder
- die von der dedizierten Anwendung (350) in Abhängigkeit von den GPS-Daten oder der Gesamtheit der zu absolvierenden Strecken und der Fortschrittsgeschwindigkeit berechnet wird, oder
- die anhand der auf einem entfernten Server gespeicherten und von der n dedizierten Anwendung (350) heruntergeladenen Informationen berechnet werden;
wobei die dedizierte Anwendung (350) ein Steuersignal für die Beleuchtungsleistung zuordnet, das dem Mittelwert der erzeugten Leistung entspricht;
wobei das drahtlose bidirektionale Kommunikationsmittel des Smartphones über die Uplinkverbindung das entsprechende Steuersignal der Beleuchtungsleistung an die tragbare Lampe überträgt und
wobei das Leistungsmodul (210, 410) die Beleuchtungsleistung der tragbaren Lampe in Reaktion auf das Steuersignal der Beleuchtungsleistung, das von der tragbaren Lampe empfangen wird, einstellt.

7. Steuerungsverfahren nach Anspruch 6, bei dem die Dauer der Autonomie von der dedizierten Anwendung (350) in Abhängigkeit von den GPS-Daten und dem Satz der zu absolvierenden Strecken sowie der Fahrgeschwindigkeit berechnet wird.

8. Steuerungsverfahren nach Anspruch 6, **dadurch gekennzeichnet, dass** es die Schritte umfasst:
- Erfassung des auf die tragbare Leuchte gerichteten Lichts mit Hilfe eines Fotosensors;
- Übertragung einer Information an das Smartphone, die für das von dem Fotosensor erfasste Licht repräsentativ ist.

9. Steuerungsverfahren nach Anspruch 6, wobei die Geometrie des von der tragbaren Lampe erzeugten Lichtstrahls durch eine Geometrie-Steuerungsinformation gesteuert wird, die von der dedizierten Anwendung (350) berechnet und von dem Smartphone über die Downlinkverbindung an die tragbare Lampe übertragen wird.

10. Steuerungsverfahren nach Anspruch 6, bei dem das Smartphone (300) eine Dringlichkeitssituation erkennt und über die Downlinkverbindung ein Alarmsteuersignal an die tragbare Lampe sendet, das die Erzeugung eines Beleuchtungsalarmsignals anfordert.

11. Steuerungsverfahren nach Anspruch 10, wobei sich die Dringlichkeitssituation aus der Verwendung von GPS-Daten ergibt, um eine Markierung zu bestimmen, die die Aufmerksamkeit des Benutzers der Leuchte auf sich ziehen soll, oder um diesen zu informieren, dass er von einem vorgegebenen Weg abweicht.

## Claims

1. Lighting system comprising a portable lamp (100, 400, 500) such as a headlamp, and a smartphone (300),
The portable lamp (100, 400, 500) including :
a lighting unit (230, 430) comprising at least on LED (231, 431) able to generate a light beam having an adjustable lighting power,
a control module (220, 420, 520) able to generate a control signal (225, 425) for controlling the lighting power generated by said lighting unit,
a power module (210, 410) able to set the lighting power of said lighting beam of the lighting unit in response of the control signal controlling the lighting power generated by the control module,
a battery (251, 451),
means for detecting the charge status of said battery, and
wireless bidirectional communication means (240, 440, 740) for establishing a uplink and a downlink communication between the portable lamp and the smartphone, and
the smartphone (300), comprising:
wireless bidirectional communication means configured to communicate via said uplink and downlink;
an dedicated application (350) stored into the memory of the smartphone,
wherein in said lighting system, said portable lamp is able to transmit via said uplink information representative of the lamp operation, comprising at least one information representative of the state of charge of the battery,
the lighting system being **characterized in that**:
said dedicated application (350) is able to compute the current state of charge of the battery,
said dedicated application (350) is able to compute a mean value of the power generated by the power module (210, 410), the mean value of the power being calculated as a function of the current state of charge of the battery as well as a autonomy duration of the portable lamp which is one of the following:
- inputted by the user as a parameter corresponding to an estimated duration in hours or minutes of a trip, or
- extracted from a personal user's database, or
- calculated by said dedicated application (350) as a function of GPS data or the whole set of route to be completed and the speed of progression, or
- calculated from information stored on a distant server and downloaded by said dedicated application (350),
wherein said dedicated application (350) is configured to associate to the mean value of the power that was computed a corresponding control signal of the lighting power,
said wireless bidirectional communication means of said smartphone are configured to transmit via said uplink said control signal for controlling the lighting power of the portable lamp, and
said power module (210, 410) is able to adjust the lighting power of the portable lamp in response to the control signal of the lighting power that is received by the portable lamp.

2. Lighting system according to claim 1, wherein the duration of autonomy is a parameter calculated by said dedicated application (350) in response to the GPS data or the set of route to complete and the progression speed.

3. Lighting system according to claim 1 **characterized in that** said portable lamp comprises a photosensor configured to generate an lighting information, said portable lamp being configured for transmitting said information to the smartphone (300) via the uplink, and
Wherein said dedicated application (350) uses the information generated by the photosensor for computing the control signal of the power.

4. Lighting system according to claim 3 wherein said photosensor operated within the visible or/and infrared field.

5. Lighting system according one among claims 1 to 4 wherein the portable lamp comprises control means for controlling the geometry of the lighting beam generated by the lighting unit, driven by a control information of the geometry being computed by the dedicated application (350) and transmitted via said downlink.

6. Un process for controlling via a smartphone (300) the operation of a portable lamp (100, 400, 500), such as a headlamp,
the portable lamp comprising:
un lighting unit (230, 430), comprising at least one LED (231, 431) able to generate a lighting beam with an adjustable lighting power,
un control module (220, 420, 520) able to generate a control signal (225, 425) of the lighting power generated by said lighting unit,
a power module (210, 410) able to adjust the lighting power of said lighting beam of the lighting unit as a function of the control signal of the lighting power that is generated by the control module,
a battery (251, 451),
means for detecting the state of charge of said battery, and
wireless bidirectional communication means (240, 440, 740) for establishing an uplink and a downlink between the portable lamp and the smartphone,
the smartphone (300) comprosing:
wireless bidirectional communication means configured for communicating via said uplink and downlink, and
a dedicated application (350) stored within the memory of said smartphone,
wherein said control process of said portable lamp transmits via said uplink information representative of the operation of the lamp, comprising at least one information representative of the state of charge of said battery,
wherein the control process is **characterized by** the following steps:
said dedicated application (350) calculates the current state of charge of said battery;
said dedicated application (350) calculates a mean value of the power generated by the power module (210, 410), the mean value of the power being calculated as a function of the current state of charge of the battery as well as an autonomy duration of the portable lamp, such autonomy duration being one of the following:
- inputted by the user as a parameter corresponding to an estimated duration in hour or minutes of a trip, or
- extracted from a personal database of the user, or
- calculated by said dedicated application (350) as a function of the GPS data or the whole set of routes to be completed and the progression speed, or
- calculated from information stored on a distant server and downloaded by said dedicated application (350);
said dedicated application (350) associates a control signal of the lighting power that corresponds to the mean value of the power generated;
said wireless bidirectional communication means of said smartphone transmits via said uplink to the portable lamp said corresponding control signal of the lighting power, and
said power module (210, 410) adjusts the lighting power of the portable lamp in response to the control signal of the lighting power that is received by the portable lamp.

7. A control process according to claim 6 wherein the duration of autonomy is computed by said dedicated application (350) as a function of the GPS data and the set of routes to complete and the progression speed.

8. A control process according to claim 6, **characterized in that** it comprises the steps:
- sensing by means of a photosensor of the light facing the portable lamp;
- transmission to said smartphone of an information representative of said light sensed by the photosensor

9. A control process according to claim 6 wherein the geometry of the light beam generated by the portable lamp is controlled by a geometry control information computed by said dedicated application (350) and transmitted by said smartphone to said portable lamp via said downlink.

10. A control process according to claim 6 wherein said smartphone (300) detects an urgency situation and transmits to the portable lamp via the downlink an alert control signal requesting the generated of a lighting alarm signal.

11. a control process according to claim 10 wherein the urgency situation results from the use of GPS data so as to determine an embranchment which should draw the attention of the user of the lamp or for informing the latter that he is straying from a predetermined path.
